# EUROPEAN PATENT APPLICATION

(11) **EP 4 723 728 A1**
(43) Date of publication of application: **08.04.2026**
(21) Application number: 24814200.2
(22) Date of filing: 17.05.2024
(51) Int. Cl.: H04W 28/06

(54) **METHOD AND APPARATUS USED IN COMMUNICATION NODE FOR WIRELESS COMMUNICATION**

(30) Priority: 26.05.2023 CN 202310603726
(71) Applicant: Apogee Networks, LLC, Plano, TX 75024 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2024/093806
(87) International publication number: WO 2024/245000

(57) **Abstract**

Disclosed in the present application are a method and apparatus used in a communication node for wireless communication. The method comprises: a communication node receiving a first message, wherein the first message configures uplink grants, and any two uplink grants configured by the first message do not overlap with each other in terms of time; triggering at least one BSR; and after the action of triggering the at least one BSR, sending a first MAC PDU on a first uplink grant, wherein whether the first MAC PDU comprises a BSR MAC CE (Control Element) depends on whether a first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message. By means of the solution provided in the present application, the reporting of a BSR is optimized, and unnecessary sending of the BSR is reduced.

## Description

### Technical Field

The present application relates to a transmission method and apparatus in a wireless communication system, in particular to a sending method and apparatus for a BSR (Buffer Status Report).

### Background Art

In the future, application scenarios of wireless communication systems will become more and more diversified, and different application scenarios will put forward performance requirements for high rates and low delay on the systems. For example, in order to meet the different performance requirements of various application scenarios, such as capacity requirements, the 3GPP (3rd Generation Partner Project) RAN (Radio Access Network) #98th plenary meeting passed a WI (Work Item) of "XR (Extended Reality) Enhancements for NR (New Radio)".

### Summary of the Invention

The inventor has found through research that sending of BSRs is a key issue, in particular, but not limited to, the sending of BSRs for a plurality of uplink grants.

In response to the above issue, the present application provides a solution for sending of control information. In the description of the above issue, an NR system is used as an example. The present application is also applicable to scenarios such as an LTE (Long-Term Evolution) system or an LTE-A (Long-Term Evolution Advanced) system to achieve technical effects similar to those of the NR system; and further, although the present application provides specific implementations for uplinks, the present application can also be used in scenarios such as downlinks to achieve technical effects similar to those of the uplinks. Further, the use of a unified solution for different scenarios also helps to reduce hardware complexity and cost. Further, although the present application provides specific implementations for XR scenarios, the present application can also be used in uplink-enhanced scenarios to achieve technical effects similar to those of an XR system. Further, although the present application provides specific implementations for BSRs, the present application can also be used in scenarios, for example, reporting of a delay or reporting equivalent to BSRs to achieve technical effects similar to those of the BSRs. Further, although the original intention of the present application is for a Uu air interface, the present application can also be used for a PC5 interface to achieve technical effects similar to those of the Uu air interface. Further, although the original intention of the present application is for a terminal and base station scenario, the present application is also applicable to a V2X (Vehicle-to-Everything) scenario, and communication scenarios between the terminal and a relay and between the relay and a base station to achieve technical effects similar to those in the terminal and base station scenario. Further, although the original intention of the present application is for a terminal and base station scenario, the present application is also applicable to a communication scenario of an IAB (Integrated Access and Backhaul) to achieve technical effects similar to those in the terminal and base station scenario. Further, although the original intention of the present application is for a terrestrial network (TN) scenario, the present application is also applicable to a communication scenario of a non-terrestrial network (NTN) to achieve technical effects similar to those in the TN scenario. In addition, the use of a unified solution for different scenarios also helps to reduce hardware complexity and costs.

As one embodiment, interpretations of terminologies in the present application refer to definitions in the specification protocol TS36 series of 3GPP.

As one embodiment, the interpretations of the terminologies in the present application refer to the definitions in the specification protocol TS38 series of 3GPP.

As one embodiment, the interpretations of the terminologies in the present application refer to the definitions in the specification protocol TS37 series of 3GPP.

It should be noted that, in the absence of conflicts, embodiments and features in the embodiments in any node of the present application may be applied to any other node. In the absence of conflicts, the embodiments and features in the embodiments of the present application can be arbitrarily combined with each other.

The present application discloses a method used in a first node for wireless communication, characterized by comprising:
receiving a first message, wherein the first message configures uplink grants, and any two uplink grants configured by the first message do not overlap with each other in terms of time;
sending first control information on a first uplink grant, wherein the first control information indicates whether at least one uplink grant following the first uplink grant is unused; and
for one uplink grant among the at least one uplink grant following the first uplink grant, determining whether to restart a first timer for an indication of the one uplink grant according to the first control information,
wherein an action of determining whether to restart the first timer for the indication of the one uplink grant according to the first control information comprises: only when the first control information does not indicate that the one uplink grant is unused, restarting the first timer; expiration of the first timer is used for triggering a BSR; and the first uplink grant and the at least one uplink grant following the first uplink grant are configured by the first message.

According to one aspect of the present application, it is characterized in that the action of determining whether to restart the first timer for the indication of the one uplink grant according to the first control information comprises: when the first control information indicates that the one uplink grant is unused, the first timer is not restarted.

As one embodiment, the problem to be solved by the present application comprises: how to optimize BSRs.

As one embodiment, the problem to be solved by the present application comprises: for one uplink grant among at least one uplink grant following the first uplink grant that is indicated by the first control information as to whether it is unused, how to process the first timer.

As one embodiment, characteristics of the above method comprise: only when the first control information does not indicate that the one uplink grant is unused, restarting the first timer.

As one embodiment, benefits of the above method comprise: reducing a probability that the first timer is restarted.

As one embodiment, the benefits of the above method comprise: increasing a probability that a BSR is triggered.

As one embodiment, the benefits of the above method comprise: the scheduling delay is shortened.

The present application discloses a method used in a second node for wireless communication, characterized by comprising:
sending a first message, wherein the first message configures uplink grants, and any two uplink grants configured by the first message do not overlap with each other in terms of time; and
receiving first control information on a first uplink grant, wherein the first control information indicates whether at least one uplink grant following the first uplink grant is unused,
wherein for one uplink grant among the at least one uplink grant following the first uplink grant, a recipient of the first message determines whether to restart a first timer for an indication of the one uplink grant according to the first control information; an action of determining whether to restart the first timer for the indication of the one uplink grant according to the first control information comprises: only when the first control information does not indicate that the one uplink grant is unused, restarting the first timer; expiration of the first timer is used for triggering a BSR; and the first uplink grant and the at least one uplink grant following the first uplink grant are configured by the first message.

According to one aspect of the present application, it is characterized in that the action of determining whether to restart the first timer for the indication of the one uplink grant according to the first control information comprises: when the first control information indicates that the one uplink grant is unused, the first timer is not restarted.

The present application discloses a first node used for wireless communication, characterized by comprising:
a first receiver receiving a first message, wherein the first message configures uplink grants, and any two uplink grants configured by the first message do not overlap with each other in terms of time; and
a first transmitter sending first control information on a first uplink grant, wherein the first control information indicates whether at least one uplink grant following the first uplink grant is unused; and
the first transmitter, for one uplink grant among the at least one uplink grant following the first uplink grant, determining whether to restart a first timer for an indication of the one uplink grant according to the first control information,
wherein an action of determining whether to restart the first timer for the indication of the one uplink grant according to the first control information comprises: only when the first control information does not indicate that the one uplink grant is unused, restarting the first timer; expiration of the first timer is used for triggering a BSR; and the first uplink grant and the at least one uplink grant following the first uplink grant are configured by the first message.

According to one aspect of the present application, it is characterized in that the action of determining whether to restart the first timer for the indication of the one uplink grant according to the first control information comprises: when the first control information indicates that the one uplink grant is unused, the first timer is not restarted.

The present application discloses a second node used for wireless communication, characterized by comprising:
a second transmitter sending a first message, wherein the first message configures uplink grants, and any two uplink grants configured by the first message do not overlap with each other in terms of time; and
a second receiver receiving first control information on a first uplink grant, wherein the first control information indicates whether at least one uplink grant following the first uplink grant is unused,
wherein for one uplink grant among the at least one uplink grant following the first uplink grant, a recipient of the first message determines whether to restart a first timer for an indication of the one uplink grant according to the first control information; an action of determining whether to restart the first timer for the indication of the one uplink grant according to the first control information comprises: only when the first control information does not indicate that the one uplink grant is unused, restarting the first timer; expiration of the first timer is used for triggering a BSR; and the first uplink grant and the at least one uplink grant following the first uplink grant are configured by the first message.

According to one aspect of the present application, it is characterized in that the action of determining whether to restart the first timer for the indication of the one uplink grant according to the first control information comprises: when the first control information indicates that the one uplink grant is unused, the first timer is not restarted.

The present application discloses a method used in a first node for wireless communication, characterized by comprising:
receiving a first message, wherein the first message configures uplink grants, and any two uplink grants configured by the first message do not overlap with each other in terms of time;
triggering at least one BSR; and after an action of triggering the at least one BSR, sending a first MAC PDU on a first uplink grant, the first MAC PDU comprising a BSR MAC CE,
wherein an indication of a first buffer size field in the BSR MAC CE comprised in the first MAC PDU depends on an uplink grant following the first uplink grant; and the first uplink grant and the uplink grant following the first uplink grant are configured by the first message.

As one embodiment, the problem to be solved by the present application comprises: how to set a value of a buffer size field in a BSR MAC CE.

As one embodiment, characteristics of the above method comprise: an indication of a buffer size field in a BSR MAC CE comprised in the first MAC PDU depends on an uplink grant following the first uplink grant.

As one embodiment, benefits of the above method comprise: avoiding resource waste caused by requesting excessive resources.

As one embodiment, the benefits of the above method comprise: facilitating resource scheduling.

The present application discloses a method used in a second node for wireless communication, characterized by comprising:
sending a first message, wherein the first message configures uplink grants, and any two uplink grants configured by the first message do not overlap with each other in terms of time; and
receiving a first MAC PDU on a first uplink grant, the first MAC PDU comprising a BSR MAC CE,
wherein after at least one BSR is triggered, the first MAC PDU is sent; an indication of a first buffer size field in the BSR MAC CE comprised in the first MAC PDU depends on an uplink grant following the first uplink grant; and the first uplink grant and the uplink grant following the first uplink grant are configured by the first message.

The present application discloses a first node used for wireless communication, characterized by comprising:
a first receiver receiving a first message, wherein the first message configures uplink grants, and any two uplink grants configured by the first message do not overlap with each other in terms of time; and
a first transmitter triggering at least one BSR, and after an action of triggering the at least one BSR, sending a first MAC PDU on a first uplink grant, the first MAC PDU comprising a BSR MAC CE,
wherein an indication of a first buffer size field in the BSR MAC CE comprised in the first MAC PDU depends on an uplink grant following the first uplink grant; and the first uplink grant and the uplink grant following the first uplink grant are configured by the first message.

The present application discloses a second node used for wireless communication, characterized by comprising:
a second transmitter sending a first message, wherein the first message configures uplink grants, and any two uplink grants configured by the first message do not overlap with each other in terms of time; and
a second receiver receiving a first MAC PDU on a first uplink grant, the first MAC PDU comprising a BSR MAC CE,
wherein after at least one BSR is triggered, the first MAC PDU is sent; an indication of a first buffer size field in the BSR MAC CE comprised in the first MAC PDU depends on an uplink grant following the first uplink grant; and the first uplink grant and the uplink grant following the first uplink grant are configured by the first message.

The present application discloses a method used in a first node for wireless communication, characterized by comprising:
receiving a first message, wherein the first message configures uplink grants, and any two uplink grants configured by the first message do not overlap with each other in terms of time;
triggering at least one BSR, and after an action of triggering the at least one BSR, sending a first MAC PDU on a first uplink grant, the first MAC PDU comprising a BSR MAC CE,
wherein a first buffer size field in the BSR MAC CE comprised in the first MAC PDU is set as a first buffer size index; a buffer size value indicated by the first buffer size field in the BSR MAC CE comprised in the first MAC PDU is related to a first buffer size value and M1; and the first buffer size index indicates the first buffer size value in a first table.

As one embodiment, the problem to be solved by the present application comprises: how to determine a buffer size value indicated by a buffer size field in a BSR MAC CE.

As one embodiment, characteristics of the above method comprise: a buffer size value indicated by the first buffer size field in a BSR MAC CE comprised in the first MAC PDU is related to the first buffer size value and M1.

As one embodiment, benefits of the above method comprise: avoiding introducing a BSR table.

As one embodiment, the benefits of the above method comprise: realizing flexible reporting of a buffer size.

The present application discloses a method used in a second node for wireless communication, characterized by comprising:
sending a first message, wherein the first message configures uplink grants, and any two uplink grants configured by the first message do not overlap with each other in terms of time; and
receiving a first MAC PDU on a first uplink grant, the first MAC PDU comprising a BSR MAC CE,
wherein a first buffer size field in the BSR MAC CE comprised in the first MAC PDU is set as a first buffer size index; a buffer size value indicated by the first buffer size field in the BSR MAC CE comprised in the first MAC PDU is related to a first buffer size value and M1; and the first buffer size index indicates the first buffer size value in a first table.

The present application discloses a first node used for wireless communication, characterized by comprising:
a first receiver receiving a first message, wherein the first message configures uplink grants, and any two uplink grants configured by the first message do not overlap with each other in terms of time; and
a first transmitter triggering at least one BSR, and after an action of triggering the at least one BSR, sending a first MAC PDU on a first uplink grant, the first MAC PDU comprising a BSR MAC CE,
wherein a first buffer size field in the BSR MAC CE comprised in the first MAC PDU is set as a first buffer size index; a buffer size value indicated by the first buffer size field in the BSR MAC CE comprised in the first MAC PDU is related to a first buffer size value and M1; and the first buffer size index indicates the first buffer size value in a first table.

The present application discloses a second node used for wireless communication, characterized by comprising:
a second transmitter sending a first message, wherein the first message configures uplink grants, and any two uplink grants configured by the first message do not overlap with each other in terms of time; and
a second receiver receiving a first MAC PDU on a first uplink grant, the first MAC PDU comprising a BSR MAC CE,
wherein after at least one BSR is triggered, the first MAC PDU is sent; a first buffer size field in the BSR MAC CE comprised in the first MAC PDU is set as a first buffer size index; a buffer size value indicated by the first buffer size field in the BSR MAC CE comprised in the first MAC PDU is related to a first buffer size value and M1; and the first buffer size index indicates the first buffer size value in a first table.

The present application discloses a method used in a first node for wireless communication, characterized by comprising:
receiving a first message, wherein the first message configures uplink grants, and any two uplink grants configured by the first message do not overlap with each other in terms of time;
triggering at least one BSR; and after an action of triggering the at least one BSR, sending a first MAC (Medium Access Control) PDU (Protocol Data Unit) on a first uplink grant,
wherein whether the first MAC PDU comprises a BSR MAC CE (Control Element) depends on whether a first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message.

As one embodiment, the problem to be solved by the present application comprises: how to optimize BSRs.

As one embodiment, the problem to be solved by the present application comprises: how to determine whether the first MAC PDU sent on the first uplink grant configured by the first message comprises the BSR MAC CE.

As one embodiment, characteristics of the above method comprise: whether the first MAC PDU comprises the BSR MAC CE depends on an uplink grant following the first uplink grant.

As one embodiment, the characteristics of the above method comprise: determining whether the first MAC PDU comprises the BSR MAC CE according to an uplink grant following the first uplink grant.

As one embodiment, the characteristics of the above method comprise: whether the first MAC PDU comprises the BSR MAC CE is related to an uplink grant following the first uplink grant.

As one embodiment, benefits of the above method comprise: optimizing reporting of a BSR.

As one embodiment, the benefits of the above method comprise: reducing unnecessary sending of a BSR.

As one embodiment, the benefits of the above method comprise: saving resources of an uplink grant.

As one embodiment, the benefits of the above method comprise: reducing signaling overhead.

As one embodiment, the benefits of the above method comprise: balancing resource scheduling and resource utilization.

According to one aspect of the present application, it is characterized by comprising:
sending first control information on the first uplink grant, wherein the first control information indicates whether at least one uplink grant following the first uplink grant is unused.

According to one aspect of the present application, it is characterized by comprising:
for one uplink grant among the at least one uplink grant following the first uplink grant, determining whether to restart a first timer for an indication of the one uplink grant according to the first control information,
wherein an action of determining whether to restart the first timer for the indication of the one uplink grant according to the first control information comprises: only when the first control information does not indicate that the one uplink grant is unused, restarting the first timer; and expiration of the first timer is used for triggering a BSR.

As one embodiment, the benefits of the above method comprise: reducing a probability that the first timer is restarted.

As one embodiment, the benefits of the above method comprise: increasing a probability that a BSR is triggered.

As one embodiment, the benefit of the above method comprises: the scheduling delay is shortened.

According to one aspect of the present application, it is characterized in that the first control information does not indicate that any uplink grant among the uplink grants following the first uplink grant is unused.

According to one aspect of the present application, it is characterized in that the first condition set is related to a delay budget of at least one data packet set, and each data packet set among the at least one data packet set comprises at least one data packet.

According to one aspect of the present application, it is characterized by comprising:
when the first condition set is satisfied, cancelling a triggered BSR,
wherein an action of cancelling the triggered BSR is used for determining that the first MAC PDU does not comprise the BSR.

According to one aspect of the present application, it is characterized in that if the first MAC PDU comprises the BSR MAC CE, an indication of a buffer size field in the BSR MAC CE comprised in the first MAC PDU depends on an uplink grant following the first uplink grant.

The present application discloses a method used in a second node for wireless communication, characterized by comprising:
sending a first message, wherein the first message configures uplink grants, and any two uplink grants configured by the first message do not overlap with each other in terms of time; and
receiving a first MAC PDU on a first uplink grant,
wherein after at least one BSR is triggered, the first MAC PDU is sent; whether the first MAC PDU comprises a BSR MAC CE depends on whether a first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message.

According to one aspect of the present application, it is characterized by comprising:
receiving first control information on the first uplink grant, wherein the first control information indicates whether at least one uplink grant following the first uplink grant is unused.

According to one aspect of the present application, it is characterized in that for one uplink grant among the at least one uplink grant following the first uplink grant, a recipient of the first message determines whether to restart a first timer for an indication of the one uplink grant according to the first control information; an action of determining whether to restart the first timer for the indication of the one uplink grant according to the first control information comprises: only when the first control information does not indicate that the one uplink grant is unused, restarting the first timer; and expiration of the first timer is used for triggering a BSR.

According to one aspect of the present application, it is characterized in that the first control information does not indicate that any uplink grant among the uplink grants following the first uplink grant is unused.

According to one aspect of the present application, it is characterized in that the first condition set is related to a delay budget of at least one data packet set, and each data packet set among the at least one data packet set comprises at least one data packet.

According to one aspect of the present application, it is characterized in that when the first condition set is satisfied, the recipient of the first message cancels a triggered BSR; and an action of cancelling the triggered BSR is used for determining that the first MAC PDU does not comprise the BSR.

According to one aspect of the present application, it is characterized in that if the first MAC PDU comprises the BSR MAC CE, an indication of a buffer size field in the BSR MAC CE comprised in the first MAC PDU depends on an uplink grant following the first uplink grant.

The present application discloses a first node used for wireless communication, characterized by comprising:
a first receiver receiving a first message, wherein the first message configures uplink grants, and any two uplink grants configured by the first message do not overlap with each other in terms of time; and
a first transmitter triggering at least one BSR, and after an action of triggering the at least one BSR, sending a first MAC PDU on a first uplink grant,
wherein whether the first MAC PDU comprises a BSR MAC CE depends on whether a first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message.

The present application discloses a second node used for wireless communication, characterized by comprising:
a second transmitter sending a first message, wherein the first message configures uplink grants, and any two uplink grants configured by the first message do not overlap with each other in terms of time; and
a second receiver receiving a first MAC PDU on a first uplink grant,
wherein after at least one BSR is triggered, the first MAC PDU is sent; whether the first MAC PDU comprises a BSR MAC CE depends on whether a first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message.

As one embodiment, compared with a traditional solution, the present application has the following advantages:
- . optimizing reporting of a BSR;
- . reducing unnecessary sending of the BSR;
- . saving resources of an uplink grant;
- . reducing signaling overhead; and
- . balancing resource scheduling and resource utilization.

### Brief Description of the Drawings

Other features, purposes and advantages of the present application will become more apparent by reading the detailed description of the non-limiting embodiments with reference to the following drawings:
FIG. 1A shows a flowchart of a transmission of a first message and a first MAC PDU according to one embodiment of the present application;
FIG. 1B shows a flowchart of a transmission of a first message and first control information according to one embodiment of the present application;
FIG. 1C shows a flowchart of a transmission of a first message and a first MAC PDU according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane according to one embodiment of the present application;
FIG. 4 shows a schematic diagram of a first communication device and a second communication device according to one embodiment of the present application;
FIG. 5 shows a flowchart of a wireless signal transmission according to one embodiment of the present application;
FIG. 6 shows a flowchart of a wireless signal transmission according to another embodiment of the present application;
FIG. 7 shows a schematic diagram in which first control information does not indicate that any uplink grant among uplink grants following a first uplink grant is unused according to one embodiment of the present application;
FIG. 8 shows a schematic diagram in which a first condition set is related to a delay budget of at least one data packet set according to one embodiment of the present application;
FIG. 9 shows a structural block diagram of a processing apparatus used in a first node according to one embodiment of the present application;
FIG. 10 shows a structural block diagram of a processing apparatus used in a second node according to one embodiment of the present application; and
FIG. 11 shows a schematic diagram in which whether to restart a first timer is determined for an indication of one uplink grant according to first control information according to one embodiment of the present application.

### Detailed Description of Embodiments

The technical solutions of the present application will be further explained in detail below in conjunction with drawings. It should be noted that, in the absence of conflicts, embodiments and features in the embodiments in the present application may be arbitrarily combined with each other.

### Embodiment 1A

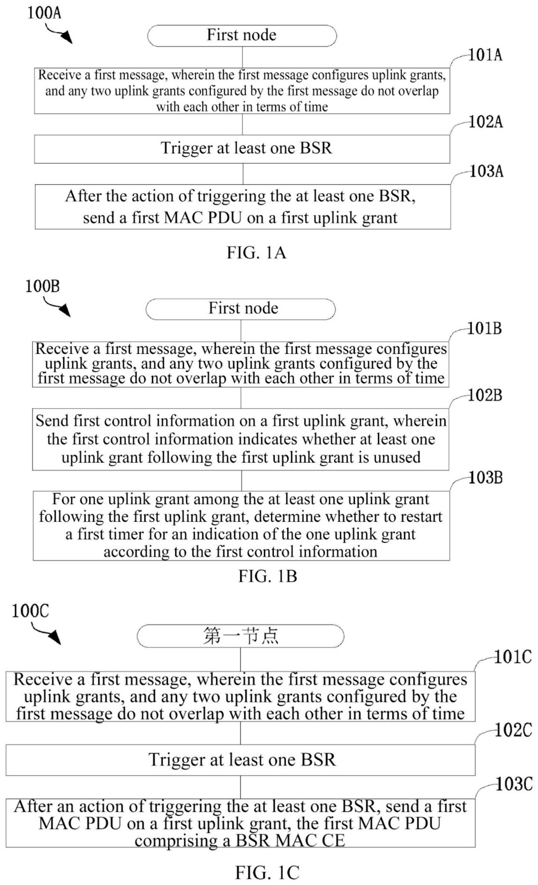

Embodiment 1A illustrates a flowchart of a transmission of a first message and a first MAC PDU according to one embodiment of the present application, as shown in FIG. 1A. In FIG. 1A, each block represents one step. It is particularly emphasized that the order of the blocks in the figure does not represent the temporal relationship between the steps represented.

In Embodiment 1A, a first node in the present application receives the first message in step 101A, wherein the first message configures uplink grants, and any two uplink grants configured by the first message do not overlap with each other in terms of time; triggers at least one BSR in step 102A; and after an action of triggering the at least one BSR, sends the first MAC PDU on a first uplink grant in step 103A, wherein whether the first MAC PDU comprises a BSR MAC CE depends on whether a first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message.

As one embodiment, the first node is configured with only a first MAC entity.

As one embodiment, the first node is configured with at least two MAC entities, and the first MAC entity is one MAC entity among the at least two MAC entities.

As one embodiment, the at least two MAC entities are two MAC entities, and the two MAC entities are a MAC entity of an MCG and a MAC entity of an SCG, respectively.

As one embodiment, the first message is UE-specific signaling.

As one embodiment, the first message is cell common signaling.

As one embodiment, the first message is used for configuring a CG (Configured Grant).

As one embodiment, the first message is used for a semi-persistently configuration.

As one embodiment, the first message is Layer 1 signaling (L1 signaling).

As one embodiment, the first message is transmitted through a PDCCH (Physical Downlink Control Channel).

As one embodiment, the first message is one piece of DCI (Downlink Control Information).

As one embodiment, a DCI format of the first message is a DCI format 0_0.

As one embodiment, the DCI format of the first message is a DCI format 0_1.

As one embodiment, the DCI format of the first message is a DCI format 0_2.

As one embodiment, the DCI format of the first message is one new DCI format.

As one embodiment, the first message comprises at least one field in one DCI format.

As one embodiment, the first message is one piece of DCI of which a CRC (Cyclic Redundancy Check) is scrambled by a CS (Configured Scheduling)-RNTI (Radio Network Temporary Identity).

As one embodiment, the first message comprises an RRC (Radio Resource Control) message.

As one embodiment, the first message comprises an RRC message and DCI.

As one embodiment, the first message comprises an RRC message and a MAC CE (Control Element).

As one embodiment, the first message is an RRC message.

As one embodiment, the first message is an RRCReconfiguration message.

As one embodiment, the first message is one CellGroupConfig IE (Information Element).

As one embodiment, the first message comprises one IE with a name that comprises ConfiguredGrantConfig.

As one embodiment, the first message is one ConfiguredGrantConfig IE.

As one embodiment, the first message comprises one field, and the one field indicates a first index.

As one sub-embodiment of this embodiment, a name of the one field comprises configuredGrantConfigIndex.

As one sub-embodiment of this embodiment, the one field is one configuredGrantConfigIndex field.

As one sub-embodiment of this embodiment, the name of the one field comprises configuredGrantConfigIndexMAC.

As one sub-embodiment of this embodiment, the one field is one configuredGrantConfigIndex field.

As one sub-embodiment of this embodiment, the first index is used for indicating one CG configuration.

As one sub-embodiment of this embodiment, the first index is used for indicating a CG configuration to which uplink grants configured by the first message belong.

As one sub-embodiment of this embodiment, the first index is associated with a CG configuration to which uplink grants configured by the first message belong.

As one embodiment, the first message comprises one field, and the one field indicates one offset.

As one sub-embodiment of this embodiment, the one offset is used for determining a time interval between any two adjacent uplink grants configured by the first message in a time domain.

As one sub-embodiment of this embodiment, the one offset is a time interval between an ending moment of one uplink grant configured by the first message and a starting moment of another uplink grant configured by the first message and immediately following the one uplink grant.

As one sub-embodiment of this embodiment, the one offset is used for determining a time interval between slots occupied by any two adjacent uplink grants configured by the first message.

As one sub-embodiment of this embodiment, the one offset is a time interval between the last slot occupied by one uplink grant configured by the first message and the first slot occupied by another uplink grant configured by the first message and immediately following the one uplink grant.

As one sub-embodiment of this embodiment, the one offset is a non-negative number.

As one sub-embodiment of this embodiment, the one offset is a positive number.

As one sub-embodiment of this embodiment, the one offset is a non-negative integer.

As one sub-embodiment of this embodiment, the one offset is a positive integer.

As one sub-embodiment of this embodiment, a unit of the one offset is in slots.

As one sub-embodiment of this embodiment, the unit of the one offset is in milliseconds (ms).

As one sub-embodiment of this embodiment, the unit of the one offset is in 0.5 slots.

As one sub-embodiment of this embodiment, the unit of the one offset is in 0.5 milliseconds.

As one embodiment, uplink grants configured by the first message are relevant.

As one embodiment, at least two uplink grants among uplink grants configured by the first message are irrelevant.

As one embodiment, uplink grants configured by the first message are for the same MAC (Medium Access Control) entity.

As one embodiment, uplink grants configured by the first message are for the same UL BWP (Bandwidth Part).

As one embodiment, uplink grants configured by the first message occupy a PUSCH (Physical Uplink Shared Channel) resource.

As one embodiment, a type of uplink grants configured by the first message is configured grant Type 1.

As one embodiment, the type of uplink grants configured by the first message is configured grant Type 2.

As one embodiment, uplink grants configured by the first message are used for a UL-SCH (Uplink Shared Channel) data transmission.

As one embodiment, uplink grants configured by the first message belong to the same CG configuration.

As one embodiment, there exist at least two uplink grants among uplink grants configured by the first message that belong to the same configuration period.

As one embodiment, each uplink grant configured by the first message is one uplink grant (UL grant).

As one embodiment, each uplink grant configured by the first message is part of one UL grant.

As one embodiment, each uplink grant configured by the first message is one transmission occasion (TO).

As one embodiment, each uplink grant configured by the first message is one transmission occasion in one configuration period.

As one embodiment, each uplink grant configured by the first message is one uplink resource block.

As one embodiment, each uplink grant configured by the first message is one PUSCH resource.

As one embodiment, each uplink grant configured by the first message occupies one PUSCH resource.

As one embodiment, each uplink grant configured by the first message occupies one PUSCH occasion.

As one embodiment, each uplink grant configured by the first message corresponds to one PUSCH duration.

As one embodiment, each uplink grant configured by the first message corresponds to one PUSCH transmission.

As one embodiment, each uplink grant configured by the first message is configured with one index.

As one sub-embodiment of this embodiment, the one index is unique within one configuration period.

As one sub-embodiment of this embodiment, the one index is used for identifying one uplink grant within one configuration period.

As one embodiment, the first message is used for determining one CG configuration, the one CG configuration comprises at least one configuration period, and each configuration period among the at least one configuration period comprises at least one uplink grant.

As one embodiment, the first message is used for determining at least one CG configuration, each CG configuration among the at least one CG configuration comprises at least one configuration period, and each configuration period among the at least one configuration period comprises at least one uplink grant.

As one embodiment, the first message configures uplink grants which belong to the same configuration period.

As one embodiment, the first message configures at least one configuration period, and each configuration period among the at least one configuration period comprises at least one uplink grant.

As one embodiment, the first message configures a starting moment of each configuration period.

As one embodiment, the first message configures a duration of each configuration period.

As one embodiment, the first message configures the number of transmission occasions in each configuration period.

As one embodiment, the first message configures a time interval between adjacent transmission occasions in each configuration period.

As one embodiment, each configuration period configured by the first message comprises at least two uplink grants.

As one embodiment, at least one configuration period configured by the first message comprises at least two uplink grants.

As one embodiment, one configuration period is a configuration period of one CG.

As one embodiment, one configuration period is a configuration period in one CG configuration.

As one embodiment, an uplink grant in one configuration period has at least one of the same MCS (Modulation Coding Mode) or frequency domain resources or a PUSCH duration.

As one embodiment, one configuration period comprises at least one uplink grant.

As one embodiment, the number of uplink grants comprised in one configuration period is configurable.

As one embodiment, the number of uplink grants comprised in one configuration period is pre-defined.

As one embodiment, the number of uplink grants comprised in one configuration period is fixed.

As one embodiment, the number of uplink grants comprised in one configuration period is explicitly indicated by an RRC message.

As one embodiment, the number of uplink grants comprised in one configuration period is implicitly indicated by an RRC message.

As one embodiment, at least one symbol is comprised between two adjacent uplink grants in one configuration period.

As one embodiment, any symbol is not comprised between two adjacent uplink grants in one configuration period.

As one embodiment, at least one symbol is comprised between any two adjacent configuration periods.

As one embodiment, any symbol is not comprised between any two adjacent configuration periods.

As one embodiment, any two uplink grants configured by the first message not overlapping with each other in terms of time refers to: time domain resources assigned for the any two uplink grants by the first message do not overlap with each other.

As one embodiment, any two uplink grants configured by the first message not overlapping with each other in terms of time refers to: PUSCH durations corresponding to the any two uplink grants configured by the first message do not overlap with each other in terms of time.

As one embodiment, any two uplink grants configured by the first message not overlapping with each other in terms of time refers to: PUSCH resources corresponding to the any two uplink grants configured by the first message do not overlap with each other in terms of time.

As one embodiment, any two uplink grants configured by the first message not overlapping with each other in terms of time refers to: time domain resources occupied by the any two uplink grants configured by the first message do not overlap with each other.

As one embodiment, one BSR in the at least one BSR is a Regular BSR.

As one embodiment, one BSR in the at least one BSR is a Periodic BSR.

As one embodiment, one BSR in the at least one BSR is a Padding BSR.

As one embodiment, one BSR in the at least one BSR is any one of the Regular BSR or the Periodic BSR or the Padding BSR.

As one embodiment, one BSR in the at least one BSR is any one of the Regular BSR or the Periodic BSR.

As one embodiment, the first MAC PDU is one MAC PDU sent after the action of triggering at least one BSR.

As one embodiment, the first MAC PDU is the first of MAC PDUs sent after the action of triggering at least one BSR.

As one embodiment, after the last BSR among the at least one BSR is triggered, the first MAC PDU is sent on the first uplink grant.

As one embodiment, after at least one BSR among the at least one BSR is triggered, the first MAC PDU is sent on the first uplink grant.

As one embodiment, when the first MAC PDU is sent on the first uplink grant, the at least one BSR has been triggered and has not been cancelled.

As one embodiment, when the first MAC PDU is sent on the first uplink grant, the at least one BSR has been triggered and has been cancelled.

As one embodiment, an action of sending the first MAC PDU on the first uplink grant comprises: an HARQ entity corresponding to the first uplink grant requests a new transmission of a TB comprising the first MAC PDU.

As one embodiment, the action of sending the first MAC PDU on the first uplink grant comprises: the first uplink grant received from an HARQ entity is stored.

As one embodiment, the action of sending the first MAC PDU on the first uplink grant comprises: a physical layer is indicated to generate one sending according to the stored first uplink grant.

As one embodiment, the first uplink grant is the last uplink grant in one configuration period.

As one embodiment, the first uplink grant is the first of uplink grants in one configuration period.

As one embodiment, the first uplink grant is the first of uplink grants executing uplink sending in one configuration period.

As one embodiment, the first uplink grant is any uplink grant in one configuration period.

As one embodiment, if the first MAC PDU comprises the BSR MAC CE, an indication of a buffer size field in the BSR MAC CE comprised in the first MAC PDU depends on an uplink grant following the first uplink grant.

As one embodiment, if the first MAC PDU comprises the BSR MAC CE, an indication of a buffer size field in the BSR MAC CE comprised in the first MAC PDU does not depend on an uplink grant following the first uplink grant.

As one embodiment, the BSR MAC CE is any one of a Long MAC CE or an Extended Long MAC CE or a Short MAC CE or an Extended Short BSR MAC CE.

As one embodiment, the BSR MAC CE is any one of a Long BSR MAC CE or an Extended Long BSR MAC CE or a Short BSR MAC CE or the Extended Short BSR MAC CE or a first BSR MAC CE.

As one embodiment, the BSR MAC CE is any one of at least one of the Long BSR MAC CE, the Extended Long BSR MAC CE, the Short BSR MAC CE, the Extended Short BSR MAC CE, and the first BSR MAC CE.

As one embodiment, the BSR MAC CE is the first BSR MAC CE.

As one embodiment, the first BSR MAC CE is indicated by a first LCID (Logical Channel ID).

As one embodiment, the first LCID is a value of an LCID field in a MAC subheader corresponding to the one BSR MAC CE.

As one embodiment, the first LCID is one integer which is not less than 37 and not greater than 42.

As one embodiment, the MAC subheader corresponding to the one BSR MAC CE comprises one LCID field, and the one LCID field indicates the first LCID.

As one embodiment, the first BSR MAC CE is indicated by a first eLCID (extended LCID).

As one embodiment, the first eLCID is a value of an eLCID field in the MAC subheader corresponding to the one BSR MAC CE.

As one embodiment, the MAC subheader corresponding to the one BSR MAC CE comprises one LCID field and one eLCID field, the one LCID field is set to 34, and the one eLCID field indicates the first eLCID.

As one embodiment, the first eLCID is one integer which is not less than 0 and not greater than 228.

As one embodiment, the first eLCID is one integer which is not less than 200 and not greater than 228.

As one embodiment, the first eLCID is one integer which is not less than 210 and not greater than 228.

As one embodiment, a format of the first BSR MAC CE comprises at least one field for indicating a delay budget.

As one embodiment, the format of the first BSR MAC CE does not comprise any field for indicating a delay budget.

As one embodiment, the first BSR MAC CE comprises a field indicating a logical channel.

As one embodiment, the first BSR MAC CE does not comprise a field indicating a logical channel.

As one embodiment, the first BSR MAC CE comprises a field indicating a logical channel group.

As one embodiment, the first BSR MAC CE does not comprise a field indicating a logical channel group.

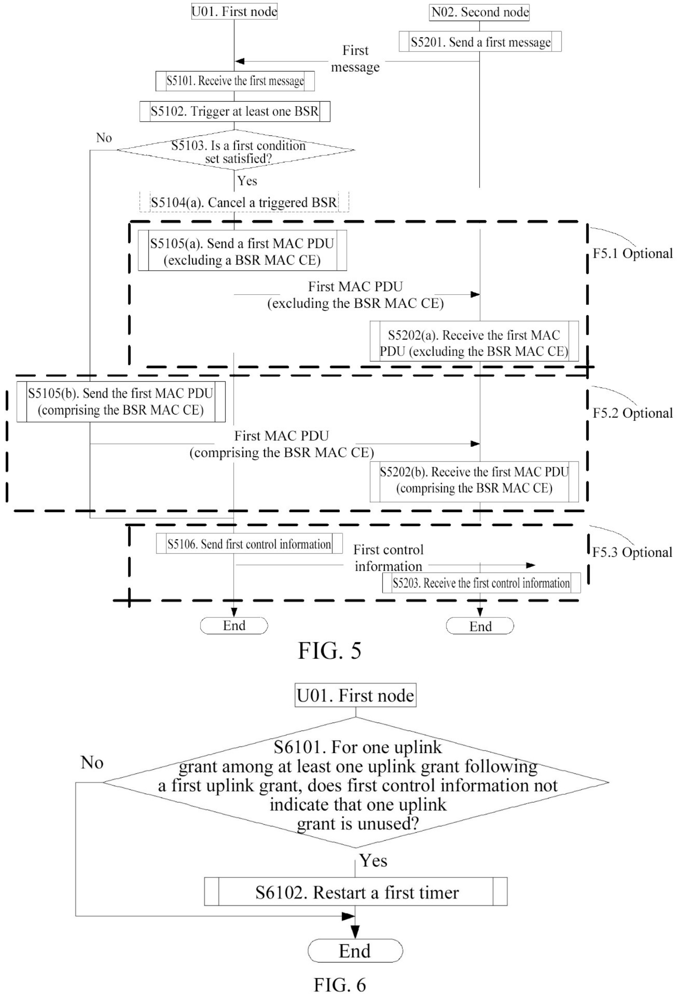

As one embodiment, the format of the first BSR MAC CE is the same as a format of FIG. 6.1.3.1-2 in 3GPP TS38.321.

As one embodiment, the format of the first BSR MAC CE is different from the format of FIG. 6.1.3.1-2 in 3GPP TS38.321.

As one embodiment, the first BSR MAC CE comprises one buffer size field.

As one embodiment, a second largest buffer size value (BS value) indicated by the one buffer size field in the first BSR MAC CE is greater than 81338368 bytes.

As one embodiment, if a value of the one buffer size field in the first BSR MAC CE is 253, a buffer size indicated by the one buffer size field in the first BSR MAC CE is greater than 81338368 bytes.

As one embodiment, the one buffer size field in the first BSR MAC CE occupies 8 bytes.

As one embodiment, the one buffer size field in the first BSR MAC CE occupies 7 bytes.

As one embodiment, the one buffer size field in the first BSR MAC CE occupies 6 bytes.

As one embodiment, a first buffer size field in the BSR MAC CE comprised in the first MAC PDU is set as a first buffer size index; a buffer size value indicated by the first buffer size field in the BSR MAC CE comprised in the first MAC PDU is not less than a first buffer size value; and the first buffer size index indicates the first buffer size value in a first table.

As one embodiment, the first buffer size field in the BSR MAC CE comprised in the first MAC PDU is set as the first buffer size index; a buffer size value indicated by the first buffer size field in the BSR MAC CE comprised in the first MAC PDU is related to the first buffer size value and M1; and the first buffer size index indicates the first buffer size value in the first table.

As one sub-embodiment of this embodiment, a buffer size value indicated by the first buffer size field in the BSR MAC CE comprised in the first MAC PDU is not greater than the product of the first buffer size value and M1.

As one sub-embodiment of this embodiment, if the first table is Table 6.1.3.1-2 in 3GPP TS38.321, the first buffer size index is 180, the first buffer size value is 824928, and a buffer size value indicated by the first buffer size field in the BSR MAC CE comprised in the first MAC PDU is not greater than 824928×M1.

As one sub-embodiment of this embodiment, a buffer size value indicated by the first buffer size field in the BSR MAC CE comprised in the first MAC PDU is not greater than the product of the first buffer size value and log2(M1).

As one sub-embodiment of this embodiment, a buffer size value indicated by the first buffer size field in the BSR MAC CE comprised in the first MAC PDU is not greater than the product of the first buffer size value and 2^{*M*1}.

As one sub-embodiment of this embodiment, the first buffer size field is any buffer size field in the first BSR MAC CE.

As one sub-embodiment of this embodiment, the first buffer size field is a buffer size field corresponding to a first LCG in the first BSR MAC CE; and the first LCG is configured with M1.

As one sub-embodiment of this embodiment, the first buffer size field is a buffer size field corresponding to a first logical channel in the first BSR MAC CE; and the first logical channel is configured with M1.

As one sub-embodiment of this embodiment, M1 is configurable.

As one sub-embodiment of this embodiment, M1 is pre-defined.

As one sub-embodiment of this embodiment, M1 is variable.

As one sub-embodiment of this embodiment, M1 is fixed.

As one sub-embodiment of this embodiment, M1 is a positive number.

As one sub-embodiment of this embodiment, M1 is a positive integer.

As one sub-embodiment of this embodiment, M1 is greater than 1.

As one sub-embodiment of this embodiment, M1 is less than 1.

As one sub-embodiment of this embodiment, an RRC message configures M1. As one embodiment, the above method avoids adding a new field to a BSR MAC CE, and reduces the impact on existing protocols.

As one sub-embodiment of this embodiment, M1 is configured to the first MAC entity.

As one sub-embodiment of this embodiment, one field in one MAC-CellGroupConfig IE indicates M1.

As one sub-embodiment of this embodiment, M1 is configured to the first logical channel.

As one sub-embodiment of this embodiment, one field in one LogicalChannelConfig IE indicates M1.

As one sub-embodiment of this embodiment, M1 is configured to the first LCG.

As one sub-embodiment of this embodiment, one MAC-CellGroupConfig IE indicates the first LCG and M1.

As one sub-embodiment of this embodiment, an RRC message indicates K1 numerical values, and M1 is one of the K1 numerical values; and K1 is a positive integer.

As one sub-embodiment of this embodiment, one MAC-CellGroupConfig IE indicates the K1 numerical values.

As one sub-embodiment of this embodiment, the K1 numerical values are configured to K1 LCGs, respectively, and the first LCG is one of the K1 LCGs.

As one sub-embodiment of this embodiment, K1 is variable.

As one sub-embodiment of this embodiment, the above method configures one scaling value for an LCG, which is more flexible.

As one sub-embodiment of this embodiment, a maximum value of K1 is maxLCG-ID+1.

As one sub-embodiment of this embodiment, a maximum value of K1 is 7.

As one sub-embodiment of this embodiment, K1 is fixed.

As one sub-embodiment of this embodiment, the above method avoids indication errors caused by signaling interaction.

As one sub-embodiment of this embodiment, one field in the BSR MAC CE comprised in the first MAC PDU indicates M1; and the BSR MAC CE comprised in the first MAC PDU is the first BSR MAC CE.

As one sub-embodiment of this embodiment, the above method enables more flexible BSR reporting.

As one embodiment, the first buffer size index is one buffer size index in the first table.

As one embodiment, the first buffer size index is one index in the first table.

As one embodiment, the first buffer size index is one buffer size level.

As one embodiment, the first buffer size index is an index corresponding to the first buffer size value in the first table.

As one embodiment, the first table comprises 256 indexes.

As one embodiment, the first table comprises 32 indexes.

As one embodiment, at least one index in the first table is reserved.

As one embodiment, any index in the first table is not reserved.

As one embodiment, the first buffer size value is one buffer size value in the first table.

As one embodiment, the BSR MAC CE comprised in the first MAC PDU is the first BSR MAC CE.

As one embodiment, the BSR MAC CE comprised in the first MAC PDU is the Long BSR MAC CE.

As one embodiment, the BSR MAC CE comprised in the first MAC PDU is the Extended Long BSR MAC CE.

As one embodiment, the BSR MAC CE comprised in the first MAC PDU is the Short BSR MAC CE.

As one embodiment, the BSR MAC CE comprised in the first MAC PDU is the Extended Short BSR MAC CE.

As one embodiment, a value of the first buffer size field in the BSR MAC CE comprised in the first MAC PDU is one index, and the one index indicates one buffer size value.

As one embodiment, a buffer size value indicated by the first buffer size field in the BSR MAC CE comprised in the first MAC PDU is determined by looking up a table.

As one embodiment, the first table is a table newly introduced in 3GPP TS38.321.

As one embodiment, the above method avoids other problems caused by dynamic configuration of a table.

As one embodiment, the above method reduces the impact on a protocol.

As one embodiment, the first table is Table 6.1.3.1-1 of 3GPP TS38.321.

As one embodiment, the first table is Table 6.1.3.1-2 of 3GPP TS38.321.

As one embodiment, the above method avoids introducing a new table.

As one embodiment, the above method enables a table to be configurable and more flexible.

As one embodiment, a phrase that the first condition set is related to an uplink grant following the first uplink grant refers to: the first condition set is related to a size of the uplink grant following the first uplink grant.

As one embodiment, the phrase that the first condition set is related to an uplink grant following the first uplink grant refers to: the first condition set is related to the number of the uplink grants following the first uplink grant.

As one embodiment, the phrase that the first condition set is related to an uplink grant following the first uplink grant refers to: the first condition set is related to a position of an uplink grant in a configuration period to which the first uplink grant belongs.

As one embodiment, the phrase that the first condition set is related to an uplink grant following the first uplink grant refers to: the first condition set is related to the first uplink grant and the uplink grant following the first uplink grant.

As one embodiment, the phrase that the first condition set is related to an uplink grant following the first uplink grant refers to: the first condition set is related to the sum of sizes of the first uplink grant and the uplink grant following the first uplink grant.

As one embodiment, the phrase that the first condition set is related to an uplink grant following the first uplink grant refers to: the first condition set is related to a position of an uplink grant in a configuration period to which the first uplink grant belongs; and the uplink grant following the first uplink grant belongs to a configuration period to which the first uplink grant belongs.

As one sub-embodiment of this embodiment, when the first uplink grant is the first of uplink grants in a configuration period to which the first uplink grant belongs, the first condition set is satisfied; and when the first uplink grant is not the first of the uplink grants in the configuration period to which the first uplink grant belongs, the first condition set is not satisfied.

As one sub-embodiment of this embodiment, when the first uplink grant is the last uplink grant in a configuration period to which the first uplink grant belongs, the first condition set is satisfied; and when the first uplink grant is not the last uplink grant in the configuration period to which the first uplink grant belongs, the first condition set is not satisfied.

As one embodiment, the phrase that the first condition set is related to an uplink grant following the first uplink grant refers to: the first condition set is related to the number of the uplink grants following the first uplink grant and a first integer.

As one sub-embodiment of this embodiment, when at least the number of the uplink grants following the first uplink grant is greater than the first integer, the first condition set is satisfied; and when at least the number of the uplink grants following the first uplink grant is less than the first integer, the first condition set is not satisfied.

As one sub-embodiment of this embodiment, when at least the number of the uplink grants following the first uplink grant is equal to the first integer, the first condition set is satisfied.

As one sub-embodiment of this embodiment, when at least the number of the uplink grants following the first uplink grant is equal to the first integer, the first condition set is not satisfied.

As one sub-embodiment of this embodiment, the first integer is configurable.

As one sub-embodiment of this embodiment, the first integer is pre-defined.

As one embodiment, the phrase that the first condition set is related to an uplink grant following the first uplink grant refers to: the first condition set is related to a position of the first uplink grant in a configuration period to which the first uplink grant belongs; and the uplink grant following the first uplink grant belongs to a configuration period to which the first uplink grant belongs.

As one sub-embodiment of this embodiment, when the first uplink grant is the first of the uplink grants in the configuration period to which the first uplink grant belongs, the first condition set is satisfied; and when the first uplink grant is not the first of the uplink grants in the configuration period to which the first uplink grant belongs, the first condition set is not satisfied.

As one sub-embodiment of this embodiment, when the first uplink grant is not the first of uplink grants in the configuration period to which the first uplink grant belongs, the first condition set is satisfied; and when the first uplink grant is the first of the uplink grants in the configuration period to which the first uplink grant belongs, the first condition set is not satisfied.

As one sub-embodiment of this embodiment, when the first uplink grant is the last uplink grant in the configuration period to which the first uplink grant belongs, the first condition set is satisfied; and when the first uplink grant is not the last uplink grant in the configuration period to which the first uplink grant belongs, the first condition set is not satisfied.

As one sub-embodiment of this embodiment, when the first uplink grant is not the last uplink grant in the configuration period to which the first uplink grant belongs, the first condition set is satisfied; and when the first uplink grant is the last uplink grant in the configuration period to which the first uplink grant belongs, the first condition set is not satisfied.

As one embodiment, the phrase that the first condition set is related to an uplink grant following the first uplink grant refers to: the first condition set is related to whether the first uplink grant and the uplink grant following the first uplink grant can accommodate all pending data available for sending.

As one sub-embodiment of this embodiment, when at least the first uplink grant and the uplink grant following the first uplink grant can accommodate all pending data available for sending, the first condition set is satisfied; and when the first uplink grant and the uplink grant following the first uplink grant cannot accommodate all pending data available for sending, the first condition set is not satisfied.

As one embodiment, the phrase that the first condition set is related to an uplink grant following the first uplink grant refers to: the first condition set is related to whether the uplink grant following the first uplink grant can accommodate remaining pending data available for sending.

As one sub-embodiment of this embodiment, when at least the uplink grant following the first uplink grant can accommodate remaining pending data available for sending, the first condition set is satisfied; and when the uplink grant following the first uplink grant cannot accommodate remaining pending data available for sending, the first condition set is not satisfied.

As one embodiment, the phrase the first condition set is related to an uplink grant following the first uplink grant refers to: the first condition set is related to whether the first uplink grant and the uplink grant following the first uplink grant can accommodate all pending data available for sending and cannot accommodate a BSR MAC CE plus its subheaders.

As one sub-embodiment of this embodiment, when at least the first uplink grant and the uplink grant following the first uplink grant can accommodate all pending data available for sending and cannot accommodate a BSR MAC CE plus its subheaders, the first condition set is satisfied; and when the first uplink grant and the uplink grant following the first uplink grant cannot accommodate all pending data available for sending or the first uplink grant and the uplink grant following the first uplink grant can accommodate all pending data available for sending and can accommodate a BSR MAC CE plus its subheaders, the first condition set is not satisfied.

As one embodiment, the uplink grant following the first uplink grant belongs to the same CG configuration configured by the first message.

As one embodiment, the uplink grant following the first uplink grant belongs to at least one CG configuration configured by the first message.

As one embodiment, the uplink grant following the first uplink grant is an adjacent uplink grant configured by the first message.

As one embodiment, there exists no any uplink grant configured by the first message between two uplink grants that are adjacent in a time domain among the uplink grants following the first uplink grant.

As one embodiment, indexes configured to the uplink grant following the first uplink grant are consecutive.

As one embodiment, the uplink grant following the first uplink grant is not an adjacent uplink grant configured by the first message.

As one embodiment, there exists at least one uplink grant configured by the first message between two consecutive uplink grants in the uplink grant following the first uplink grant.

As one embodiment, indexes configured to the uplink grant following the first uplink grant are not consecutive.

As one embodiment, the uplink grant following the first uplink grant belongs to the same configuration period.

As one sub-embodiment of this embodiment, the same configuration period is configured by the first message.

As one sub-embodiment of this embodiment, the same configuration period comprises the first uplink grant.

As one embodiment, the uplink grant following the first uplink grant belongs to at least one configuration period.

As one sub-embodiment of this embodiment, the at least one configuration period is configured by the first message.

As one sub-embodiment of this embodiment, one configuration period among the at least one configuration period comprises the first uplink grant.

As one sub-embodiment of this embodiment, the at least one configuration period is one configuration period.

As one sub-embodiment of this embodiment, the at least one configuration period is a plurality of configuration periods, and the plurality of configuration periods are consecutive.

As one sub-embodiment of this embodiment, the at least one configuration period is the plurality of configuration periods, and the plurality of configuration periods are not consecutive.

As one embodiment, the uplink grant following the first uplink grant belongs to at most Q1 configuration periods; and Q1 is a positive integer.

As one sub-embodiment of this embodiment, Q1 is pre-defined.

As one sub-embodiment of this embodiment, Q1 is configurable.

As one sub-embodiment of this embodiment, Q1 is fixed.

As one sub-embodiment of this embodiment, Q1 is 2.

As one sub-embodiment of this embodiment, Q1 is 1.

As one sub-embodiment of this embodiment, the Q1 configuration periods are adjacent.

As one embodiment, the number of the uplink grants following the first uplink grant is indicated by an RRC message.

As one embodiment, the number of the uplink grants following the first uplink grant is explicitly indicated by an RRC message.

As one embodiment, the number of the uplink grants following the first uplink grant is implicitly indicated by an RRC message.

As one embodiment, the number of the uplink grants following the first uplink grant is fixed.

As one embodiment, the number of the uplink grants following the first uplink grant is default.

As one embodiment, the number of the uplink grants following the first uplink grant is pre-defined.

As one embodiment, the number of the uplink grants following the first uplink grant depends on the number of bits occupied by a first bitmap in first control information.

As one embodiment, the number of the uplink grants following the first uplink grant depends on an uplink grant that is later than the first uplink grant in a time domain in a configuration period to which the first uplink grant belongs.

As one embodiment, any uplink grant among the uplink grants following the first uplink grant is later than the first uplink grant in terms of time.

As one embodiment, any uplink grant among the uplink grants following the first uplink grant belongs to a given time interval in a time domain.

As one sub-embodiment of this embodiment, a length of the given time interval is a semi-persistently configured.

As one sub-embodiment of this embodiment, the length of the given time interval is dynamically varied.

As one sub-embodiment of this embodiment, the given time interval is configured by RRC.

As one sub-embodiment of this embodiment, the given time interval is pre-defined.

As one sub-embodiment of this embodiment, the given time interval is a positive integer number of milliseconds.

As one sub-embodiment of this embodiment, the given time interval is a positive integer number of sending periods.

As one sub-embodiment of this embodiment, the sending period is a time interval between two adjacent uplink grants in one configuration period.

As one sub-embodiment of this embodiment, the given time interval is a positive integer number of configuration periods.

As one sub-embodiment of this embodiment, a starting moment of the given time interval is related to a time domain position of the first uplink grant.

As one sub-embodiment of this embodiment, the starting moment of the given time interval is a starting moment of a time domain position of the first uplink grant.

As one sub-embodiment of this embodiment, the starting moment of the given time interval is an ending moment of a time domain position of the first uplink grant.

As one sub-embodiment of this embodiment, the starting moment of the given time interval is a moment that X1 symbols have passed following an ending moment of a time domain position of the first uplink grant; and X1 is pre-defined, or X1 is pre-configured.

As one sub-embodiment of this embodiment, the given time interval is a time interval between the first uplink grant and the last uplink grant in a configuration period to which the first uplink grant belongs.

As one embodiment, any uplink grant in the uplink grant following the first uplink grant is one valid uplink grant.

As one sub-embodiment of this embodiment, the valid uplink grant is an uplink grant that at least does not overlap with a first symbol set.

As one sub-embodiment of this embodiment, the valid uplink grant is an uplink grant that at least belongs to the given time interval.

As one sub-embodiment of this embodiment, the valid uplink grant is an uplink grant that is at least later than the first uplink grant in a time domain.

As one sub-embodiment of this embodiment, the valid uplink grant is an uplink grant that at least belongs to the given time interval and does not overlap with the first symbol set.

As one sub-embodiment of this embodiment, the valid uplink grant is an uplink grant that is at least later than the first uplink grant in a time domain and does not overlap with the first symbol set.

As one sub-embodiment of this embodiment, the valid uplink grant is an uplink grant that is at least later than the first uplink grant in a time domain and belongs to the given time interval and does not overlap with the first symbol set.

As one embodiment, all the pending data available for sending is data available for sending when the first uplink grant is sent.

As one embodiment, all the pending data available for sending is data available for sending when processing the first uplink grant.

As one embodiment, the remaining pending data available for sending is data remaining after removing data sent on the first uplink grant from all the pending data available for sending.

As one embodiment, the remaining pending data available for sending is data remaining after removing data sent on the first uplink grant from all the pending data available for sending when processing the first uplink grant.

As one embodiment, the processing the first uplink grant comprises: executing HARQ operations for the first uplink grant.

As one embodiment, the processing the first uplink grant comprises: executing a multiplexing and assembly process for the first uplink grant.

As one embodiment, the processing the first uplink grant comprises: executing an LCP (Logical Channel Prioritization) process for the first uplink grant.

As one embodiment, this embodiment does not limit a specific moment of processing the first uplink grant.

As one embodiment, all the pending data available for sending comprises a data packet set.

As one embodiment, all the pending data available for sending comprises a data packet set and data packets.

As one embodiment, the remaining pending data available for sending comprises a data packet set.

As one embodiment, the remaining pending data available for sending comprises a data packet set and data packets.

As one embodiment, one BSR among the at least one BSR is triggered by at least a data packet set.

As one embodiment, one BSR among the at least one BSR is triggered by at least a data packet set.

As one embodiment, one BSR among the at least one BSR is triggered by uplink data for one logical channel that becomes available to the MAC entity.

As one embodiment, one BSR among the at least one BSR is triggered by expiration of retxBSR-Timer.

As one embodiment, one BSR among the at least one BSR is triggered by expiration of periodicBSR-Timer.

As one embodiment, at least two data packets in one data packet set have a dependency relationship.

As one embodiment, any two data packets in one data packet set have the dependency relationship.

As one embodiment, one data packet set comprises at least one data packet.

As one embodiment, one data packet set comprises a plurality of data packets.

As one embodiment, one data packet set comprises a finite number of data packets.

As one embodiment, one data packet set is one PDU set.

As one embodiment, one data packet set is associated with one PDCP (Packet Data Convergence Protocol) entity.

As one embodiment, one data packet set is associated with a plurality of PDCP entities.

As one embodiment, one data packet set is not associated with the plurality of PDCP entities.

As one embodiment, one data packet set is associated with only one DRB (Data Radio Bearer).

As one embodiment, one data packet set is associated with a plurality of DRBs.

As one embodiment, one data packet set is associated with one or more DRBs.

As one embodiment, all data packets in one data packet set belong to the same LCG.

As one embodiment, any two data packets in one data packet set belong to different LCGs.

As one embodiment, there exist two data packets in one data packet set belonging to different LCGs.

As one embodiment, any two data packets in one data packet set belong to the same LCG.

As one embodiment, any two data packets in one data packet set belong to the same logical channel of the same LCG.

As one embodiment, any two data packets in one data packet set belong to different logical channels of the same LCG.

For the one embodiment, at least one data packet in one data packet set is a buffered data packet.

For the one embodiment, each data packet in one data packet set is the buffered data packet.

For the one embodiment, at least one data packet in one data packet set is an expected data packet.

For the one embodiment, each data packet in one data packet set is the expected data packet.

As one embodiment, one data packet in one data packet set is one PDU.

As one embodiment, one data packet in one data packet set is a payload of one PDU.

As one embodiment, one data packet in one data packet set is a data packet of a PDCP sublayer.

As one embodiment, one data packet in one data packet set is one PDCP PDU.

As one embodiment, one data packet in one data packet set is one PDCP SDU.

As one embodiment, one data packet in one data packet set is a data packet of an RLC sublayer.

As one embodiment, one data packet in one data packet set is one RLC PDU.

As one embodiment, one data packet in one data packet set is one RLC SDU.

As one embodiment, one data packet in one data packet set is one RLC SDU segment.

As one embodiment, each data packet in one data packet set corresponds to one given identifier.

As one embodiment, each data packet in one data packet set is configured with one given identifier.

As one embodiment, each data packet in one data packet set is indicated with one given identifier.

As one embodiment, each data packet in one data packet set is marked with one given identifier.

### Embodiment 1B

Embodiment 1B illustrates a flowchart of a transmission of a first message and first control information according to one embodiment of the present application, as shown in FIG. 1B. In FIG. 1B, each block represents one step. It is particularly emphasized that the order of the blocks in the figure does not represent the temporal relationship between the steps represented.

In Embodiment 1B, a first node in the present application receives the first message in step 101B, wherein the first message configures uplink grants, and any two uplink grants configured by the first message do not overlap with each other in terms of time; sends the first control information on a first uplink grant, wherein the first control information indicates whether at least one uplink grant following the first uplink grant is unused in step 102B; and for one uplink grant among the at least one uplink grant following the first uplink grant, determines whether to restart a first timer for an indication of the one uplink grant according to the first control information in step 103B, wherein an action of determining whether to restart the first timer for the indication of the one uplink grant according to the first control information comprises: only when the first control information does not indicate that the one uplink grant is unused, restarting the first timer; expiration of the first timer is used for triggering a BSR; and the first uplink grant and the at least one uplink grant following the first uplink grant are configured by the first message.

As one embodiment, the action of determining whether to restart the first timer for the indication of the one uplink grant according to the first control information comprises: when the first control information indicates that the one uplink grant is unused, the first timer is not restarted.

As one embodiment, a first MAC PDU is sent on the first uplink grant.

As one embodiment, the first MAC PDU comprises at least one of a MAC SDU (Service Data Unit) or a MAC CE or a MAC subheader or padding.

As one embodiment, whether the first MAC PDU comprises a BSR MAC CE depends on whether a first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; the first uplink grant and the uplink grant following the first uplink grant are configured by the first message; and before the first MAC PDU is sent, at least one BSR is triggered.

As one embodiment, whether the first MAC PDU comprises the BSR MAC CE does not depend on whether the first condition set is satisfied.

### Embodiment 1C

Embodiment 1C illustrates a flowchart of a transmission of a first message and a first MAC PDU according to one embodiment of the present application, as shown in FIG. 1C. In FIG. 1C, each block represents one step. It is particularly emphasized that the order of the blocks in the figure does not represent the temporal relationship between the steps represented.

In Embodiment 1C, a first node in the present application receives the first message in step 101B, wherein the first message configures uplink grants, and any two uplink grants configured by the first message do not overlap with each other in terms of time; triggers at least one BSR in step 102B; and after an action of triggering the at least one BSR, sends the first MAC PDU on a first uplink grant in step 103B, the first MAC PDU comprising a BSR MAC CE.

As one embodiment, an indication of a first buffer size field in the BSR MAC CE comprised in the first MAC PDU depends on an uplink grant following the first uplink grant; and the first uplink grant and the uplink grant following the first uplink grant are configured by the first message.

As one embodiment, the meaning of a phrase that the indication of the first buffer size field in the BSR MAC CE comprised in the first MAC PDU depends on an uplink grant following the first uplink grant is: a size of at least the uplink grant following the first uplink grant, removed based on a total amount of available data obtained according to a data amount calculation process in 3GPP TS 38.322 and 3GPP TS 38.323, is used for determining a buffer size value of the first buffer size field in the BSR MAC CE comprised in the first MAC PDU.

As one embodiment, the meaning of the phrase that the indication of the first buffer size field in the BSR MAC CE comprised in the first MAC PDU depends on an uplink grant following the first uplink grant is: after the first MAC PDU has been built, a size of at least the uplink grant following the first uplink grant, removed based on a total amount of available data of all logical channels of one LCG obtained according to a data amount calculation process in 3GPP TS 38.322 and 3GPP TS 38.323, is used for determining a buffer size value of the first buffer size field in the BSR MAC CE comprised in the first MAC PDU.

As one embodiment, the meaning of the phrase that the indication of the first buffer size field in the BSR MAC CE comprised in the first MAC PDU depends on an uplink grant following the first uplink grant is: after the first MAC PDU has been built, a size of at least the uplink grant following the first uplink grant, removed based on a total amount of available data of at least one logical channel obtained according to a data amount calculation process in 3GPP TS 38.322 and 3GPP TS 38.323, is used for determining a buffer size value indicated by the first buffer size field in the BSR MAC CE comprised in the first MAC PDU.

As one embodiment, the first buffer size field in the BSR MAC CE comprised in the first MAC PDU is set as a first buffer size index; a buffer size value indicated by the first buffer size field in the BSR MAC CE comprised in the first MAC PDU is related to a first buffer size value and M1; and the first buffer size index indicates the first buffer size value in a first table.

As one embodiment, a buffer size value indicated by the first buffer size field in the BSR MAC CE comprised in the first MAC PDU is related to the first buffer size value and M1, or, an indication of the first buffer size field in the BSR MAC CE comprised in the first MAC PDU depends on an uplink grant following the first uplink grant.

As one embodiment, a buffer size value indicated by the first buffer size field in the BSR MAC CE comprised in the first MAC PDU is related to the first buffer size value and M1, and an indication of the first buffer size field in the BSR MAC CE comprised in the first MAC PDU depends on an uplink grant following the first uplink grant.

### Embodiment 2

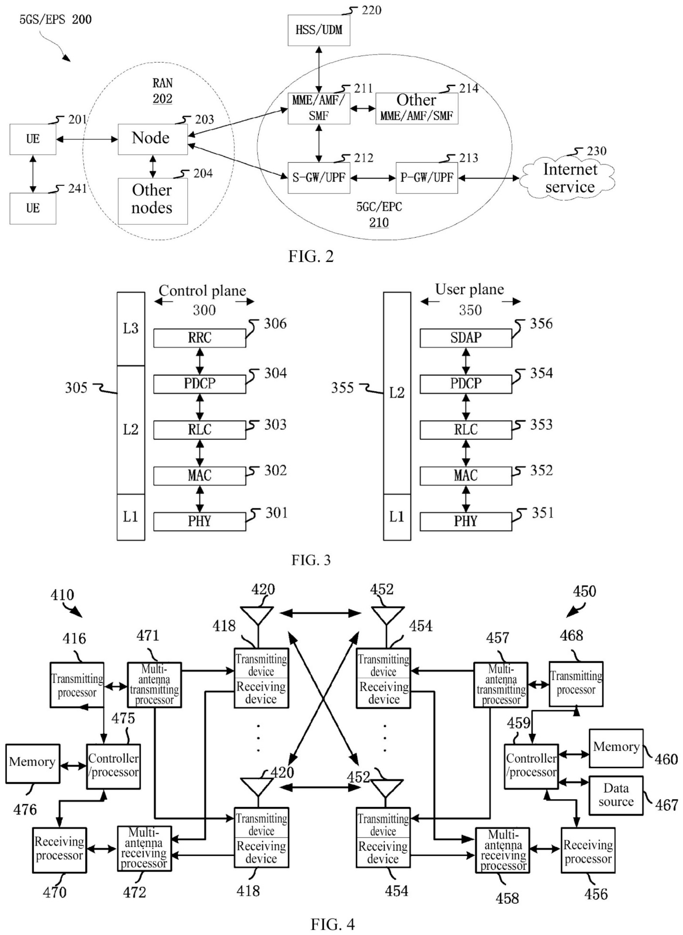

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as 5GS (5G System)/EPS (Evolved Packet System) 200 or some other suitable terminologies. The 5GS/EPS 200 comprises at least one of UE (User Equipment) 201, an RAN (Radio Access Network) 202, a 5GC (5G Core Network)/EPC (Evolved Packet Core) 210, an HSS (Home Subscriber Server)/UDM (Unified Data Management) 220, and an Internet Service 230. The 5GS/EPS may be interconnected with other access networks, but these entities/interfaces are not shown for simplicity. As shown in the figure, the 5GS/EPS provides packet switching services, but those skilled in the art will readily understand that various concepts presented throughout the present application may be extended to networks that provide circuit switching services or other cellular networks. The RAN comprises a node 203 and other nodes 204. The node 203 provides user and control plane protocol termination towards the UE201. The node 203 may be connected to the other nodes 204 via an Xn interface (e.g., backhaul)/X2 interface. The node 203 may also be referred to as a base station, a base transceiver station, a radio base station, a radio transceiving device, a transceiving device function, a basic service set (BSS), an extended service set (ESS), a TRP (Transmitter Receiver Point), or some other suitable terminologies. The node 203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land transportation vehicle, an automobile, a wearable device, or any other similar functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The node 203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address assignment and other functions. The P-GW/UPF213 is connected to the Internet service 230. The Internet service 230 comprises an Internet protocol service corresponding to an operator, and may specifically comprise the Internet, an intranet, an IMS (IP Multimedia Subsystem), and a packet switching streaming service.

As one embodiment, the UE201 corresponds to a first node in the present application.

As one embodiment, the UE201 is one piece of user equipment (UE).

As one embodiment, the UE201 is one BaseStation (BS) device.

As one embodiment, the UE201 is one relay device.

As one embodiment, the UE201 is one gateway device.

As one embodiment, the node 203 corresponds to a second node in the present application.

As one embodiment, the node 203 is one base station device.

As one embodiment, the node 203 is one piece of user equipment.

As one embodiment, the node 203 is one relay device.

As one embodiment, the node 203 is one gateway device.

Typically, the UE201 is one piece of user equipment, and the node 203 is one base station device.

Typically, the UE201 is one piece of user equipment, and the node 203 is one piece of user equipment.

Typically, the UE201 is one base station device, and the node 203 is one base station device.

As one embodiment, the user equipment supports a transmission in a non-terrestrial network (NTN).

As one embodiment, the user equipment supports a transmission in a terrestrial network.

As one embodiment, the user equipment supports a dual connection (DC) transmission.

As one embodiment, the user equipment comprises an aircraft.

As one embodiment, the user equipment comprises a vehicle terminal.

As one embodiment, the user equipment comprises a ship.

As one embodiment, the user equipment comprises an Internet of Things terminal.

As one embodiment, the user equipment comprises an industrial Internet of Things terminal.

As one embodiment, the user equipment comprises a device that supports a low-delay and high-reliability transmission.

As one embodiment, the user equipment comprises a test device.

As one embodiment, the user equipment comprises a signaling tester.

As one embodiment, the user equipment comprises an IAB (Integrated Access and Backhaul)-MT (Mobile Termination).

As one embodiment, the base station device supports a transmission in a non-terrestrial network.

As one embodiment, the base station device supports a transmission in a terrestrial network.

As one embodiment, the base station device comprises a base transceiver station (BTS).

As one embodiment, the base station device comprises a NodeB (NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device comprises a CU (Centralized Unit).

As one embodiment, the base station device comprises a DU (Distributed Unit).

As one embodiment, the base station device comprises a TRP (Transmitter Receiver Point).

As one embodiment, the base station device comprises a Macro Cellular base station.

As one embodiment, the base station device comprises a Micro Cell base station.

As one embodiment, the base station device comprises a Pico Cell base station.

As one embodiment, the base station device comprises a Femtocell.

As one embodiment, the base station device comprises a flight platform device.

As one embodiment, the base station device comprises a satellite device.

As one embodiment, the base station device comprises a test device.

As one embodiment, the base station device comprises a signaling tester.

As one embodiment, the base station device comprises a gateway device.

As one embodiment, the base station device comprises an IAB-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay device comprises a relay.

As one embodiment, the relay device comprises an L3 relay.

As one embodiment, the relay device comprises an L2 relay.

As one embodiment, the relay device comprises a router.

As one embodiment, the relay device comprises a switch.

As one embodiment, the relay device comprises a gateway device.

As one embodiment, the relay device comprises user equipment.

As one embodiment, the relay device comprises a base station device.

### Embodiment 3

Embodiment 3 shows a schematic diagram of an embodiment of a wireless protocol architecture of one user plane and one control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 using three layers: a Layer 1, a Layer 2, and a Layer 3. The Layer 1 (L1 layer) is the lowest layer and implements various PHY (Physical Layer) signal processing functions. The L1 layer will be referred to as a PHY301 herein. A Layer 2 (L2 layer) 305 is above the PHY301, and comprises a MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides handover support. The RLC sublayer 303 provides segmentation and reassembly of upper-layer packets, retransmission of lost data packets, and reordering of data packets to compensate for unordered reception caused by a HARQ (Hybrid Automatic Repeat Request). The MAC sublayer 302 provides multiplexing between logical and transport channels. The MAC sublayer 302 is also responsible for assigning various radio resources (e.g., resource blocks) in one cell. The MAC sublayer 302 is also responsible for HARQ operations. The RRC (Radio Resource Control) sublayer 306 in the Layer 3 (L3 layer) in the control plane 300 is responsible for obtaining radio resources (i.e., radio bearers) and configuring lower layers by using RRC signaling. The radio protocol architecture for the user plane 350 comprises the Layer 1 (L1 layer) and the Layer 2 (L2 layer). The radio protocol architecture in the user plane 350 is substantially the same as that for the corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services.

As one embodiment, the wireless protocol architecture in FIG. 3 is applicable to a first node in the present application.

As one embodiment, the wireless protocol architecture in FIG. 3 is applicable to a second node in the present application.

As one embodiment, a first message in the present application is generated in an RRC306.

As one embodiment, the first message in the present application is generated in a MAC302 or MAC352.

As one embodiment, the first message in the present application is generated in the PHY301 or a PHY351.

As one embodiment, a first MAC PDU in the present application is generated in the RRC306.

As one embodiment, the first MAC PDU in the present application is generated in the MAC302 or the MAC352.

As one embodiment, first control information in the present application is generated in the RRC306.

As one embodiment, the first control information in the present application is generated in the MAC302 or MAC352.

### Embodiment 4

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In a transmission from the second communication device 410 to the first communication device 450, at the second communication device 410, an upper-layer data packet from a core network is provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource assignment to the first communication device 450 based on various priority metrics. The controller/processor 475 is also responsible for the retransmission of lost packets and signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410 and mapping of signal constellations based on various modulation solutions (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more spatial streams. The transmitting processor 416 then maps each spatial stream to subcarriers, multiplexes with a reference signal (e.g., pilot) in the time domain and/or frequency domain, and then uses an inverse fast Fourier transform (IFFT) to produce a physical channel that carries a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the second communication device 410 to the first communication device 450, at the first communication device 450, each receiving device 454 receives a signal through its corresponding antenna 452. Each receiving device 454 recovers information modulated onto a radio frequency carrier, converts a radio frequency stream into a baseband multi-carrier symbol stream, and provides it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 converts the baseband multi-carrier symbol stream subjected to the receiving analog precoding/beamforming operations from the time domain to the frequency domain using a fast Fourier transform (FFT). In the frequency domain, a physical layer data signal and the reference signal are demultiplexed by the receiving processor 456, wherein the reference signal is used for channel estimation, and the data signal is subjected to multi-antenna detection in the multi-antenna receiving processor 458 to recover any spatial streams destined for the first communication device 450. Symbols on each spatial stream are demodulated and recovered in the receiving processor 456, and a soft decision is generated. The receiving processor 456 then decodes and deinterleaves the soft decision to recover upper-layer data and control signals transmitted by the second communication device 410 on the physical channel. The upper layer data and control signals are then provided to the controller/processor 459. The controller/processor 459 implements functions of the L2 layer. The controller/processor 459 may be associated with the memory 460 that stores program code and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover upper-layer data packets from the core network. The upper layer data packets are then provided to all protocol layers above the L2 layer. Various control signals may also be provided to an L3 for L3 processing.

In a transmission from the first communication device 450 to the second communication device 410, at the first communication device 450, a data source 467 is used for providing the upper-layer data packet to the controller/processor 459. The data source 467 represents all protocol layers above the L2 layer. Similar to a sending function at the second communication device 410 as described in the transmission from the second communication device 410 to the first communication device 450, the controller/processor 459 implements header compression, encryption, packet segmentation and reordering, and multiplexing between logical and transport channels based on radio resource assignment, and implements the function of the L2 layer for the user plane and the control plane. The controller/processor 459 is also responsible for retransmission of lost packets and signaling to the second communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated spatial stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into the radio frequency symbol stream, which is then provided to the antenna 452.

In the transmission from the first communication device 450 to the second communication device 410, the function at the second communication device 410 is similar to a receiving function at the first communication device 450 as described in the transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 that stores program code and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from UE450. The upper layer data packets from the controller/processor 475 can be provided to the core network.

As one embodiment, the first communication device 450 comprises: at least one processor and at least one memory, the at least one memory comprising computer program code; and the at least one memory and the computer program code are configured to be used together with the at least one processor, and the first communication device 450 at least: receives a first message, wherein the first message configures uplink grants, and any two uplink grants configured by the first message do not overlap with each other in terms of time; triggers at least one BSR, and after an action of triggering the at least one BSR, sends a first MAC PDU on a first uplink grant, wherein whether the first MAC PDU comprises a BSR MAC CE depends on whether a first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message.

As one embodiment, the first communication device 450 comprises: a memory that stores a computer readable instruction program, the computer readable instruction program generating actions when executed by at least one processor, the actions comprising: receiving the first message, wherein the first message configures uplink grants, and any two uplink grants configured by the first message do not overlap with each other in terms of time; triggering at least one BSR, and after the action of triggering the at least one BSR, sending the first MAC PDU on the first uplink grant, wherein whether the first MAC PDU comprises the BSR MAC CE depends on whether the first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message.

As one embodiment, the second communication device 410 comprises: at least one processor and at least one memory, the at least one memory comprising computer program code; and the at least one memory and the computer program code are configured to be used together with the at least one processor. The second communication device 410 at least: sends the first message, wherein the first message configures uplink grants, and any two uplink grants configured by the first message do not overlap with each other in terms of time; and receives the first MAC PDU on the first uplink grant, wherein after at least one BSR is triggered, the first MAC PDU is sent; whether the first MAC PDU comprises the BSR MAC CE depends on whether the first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message.

As one embodiment, the second communication device 410 comprises: a memory that stores a computer readable instruction program, the computer readable instruction program generating actions when executed by at least one processor, the actions comprising: sending the first message, wherein the first message configures uplink grants, and any two uplink grants configured by the first message do not overlap with each other in terms of time; and receiving the first MAC PDU on the first uplink grant, wherein after at least one BSR is triggered, the first MAC PDU is sent; whether the first MAC PDU comprises the BSR MAC CE depends on whether the first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message.

As one embodiment, at least one of the antenna 452, the receiving device 454, the receiving processor 456, and the controller/processor 459 is used for receiving the first message.

As one embodiment, at least one of the antenna 420, the transmitting device 418, the transmitting processor 416, and the controller/processor 475 is used for sending the first message.

As one embodiment, at least one of the antenna 452, the receiving device 454, the receiving processor 456, and the controller/processor 459 is used for triggering at least one BSR.

As one embodiment, at least one of the antenna 452, the receiving device 454, the receiving processor 456, and the controller/processor 459 is used for cancelling a triggered BSR.

As one embodiment, at least one of the antenna 452, the transmitting device 454, the transmitting processor 468, and the controller/processor 459 is used for sending the first MAC PDU.

As one embodiment, at least one of the antenna 420, the receiving device 418, the receiving processor 470, and the controller/processor 475 is used for receiving the first MAC PDU.

As one embodiment, at least one of the antenna 452, the transmitting device 454, the transmitting processor 468, and the controller/processor 459 is used for sending first control information.

As one embodiment, at least one of the antenna 420, the receiving device 418, the receiving processor 470, and the controller/processor 475 is used for receiving the first control information.

As one embodiment, the first communication device 450 corresponds to a first node in the present application.

As one embodiment, the second communication device 410 corresponds to a second node in the present application.

As one embodiment, the first communication device 450 is one piece of user equipment.

As one embodiment, the first communication device 450 is one base station device.

As one embodiment, the first communication device 450 is one relay device.

As one embodiment, the second communication device 410 is one piece of user equipment.

As one embodiment, the second communication device 410 is one base station device.

As one embodiment, the second communication device 410 is one relay device.

### Embodiment 5

Embodiment 5 illustrates a flowchart of a wireless signal transmission according to one embodiment of the present application, as shown in FIG. 5. It is particularly noted that the order in this example does not limit the signal transmission order and implementation order in the present application.

For **a first node U01,** in step S5101, a first message is received, wherein the first message configures uplink grants, and any two uplink grants configured by the first message do not overlap with each other in terms of time; in step S5102, at least one BSR is triggered; in step S5103, whether a first condition set is satisfied is determined; when the first condition set is satisfied, step S5105(a) is executed; when the first condition set is not satisfied, step S5105(b) is executed; in step S5105(a), after an action of triggering at least one BSR, a first MAC PDU is sent on a first uplink grant, and the first MAC PDU does not comprise a BSR MAC CE; in step S5105(b), after the action of triggering the at least one BSR, the first MAC PDU is sent on the first uplink grant, and the first MAC PDU comprises the BSR MAC CE; in step S5104, when the first condition set is satisfied, a triggered BSR is cancelled; and in step S5106, first control information is sent on the first uplink grant, wherein the first control information indicates whether at least one uplink grant following the first uplink grant is unused.

For **a second node N02,** in step S5201, the first message is sent; in step S5202(a), the first MAC PDU is received, and the first MAC PDU does not comprise the BSR MAC CE; in step S5202(b), the first MAC PDU is received, and the first MAC PDU comprises the BSR MAC CE; and in step S5203, the first control information is received.

In Embodiment 5, whether the first MAC PDU comprises the BSR MAC CE depends on whether the first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message.

As one embodiment, the first node U01 is one piece of user equipment.

As one embodiment, the first node U01 is one base station device.

As one embodiment, the first node U01 is one relay device.

As one embodiment, the second node N02 is one base station device.

As one embodiment, the second node N02 is one piece of user equipment.

As one embodiment, the second node N02 is one relay device.

As one embodiment, the first node U01 is one piece of user equipment, and the second node N02 is one base station device.

As one embodiment, the first node U01 is one piece of user equipment, and the second node N02 is one piece of user equipment.

As one embodiment, the first node U01 is one base station device, and the second node N02 is one base station device.

As one embodiment, the first node U01 and the second node N02 are connected in a wireless mode.

As one embodiment, the first node U01 and the second node N02 are connected in a wired mode.

As one embodiment, the first node U01 and the second node N02 are connected via a Uu interface.

As one embodiment, the first node U01 and the second node N02 are connected through an IAB interface.

As one embodiment, the first node U01 and the second node N02 are connected through a PC5 interface.

As one embodiment, only one of a dotted block F5.1 and a dotted block F5.2 exists.

As one embodiment, the dotted block F5.1 exists, and the dotted block F5.2 does not exist.

As one sub-embodiment of this embodiment, step S5104(a) exists.

As one dependent embodiment of this sub-embodiment, the above method reduces the sending of the BSR MAC CE and saves resources.

As one dependent embodiment of this sub-embodiment, an action of cancelling the triggered BSR refers to: cancelling all triggered BSRs.

As one dependent embodiment of this sub-embodiment, the action of cancelling the triggered BSR refers to: cancelling the at least one triggered BSR.

As one dependent embodiment of this sub-embodiment, if the step S5104(a) is executed, the step S5105(a) is executed.

As one sub-embodiment of this embodiment, the S5104(a) does not exist.

As one dependent embodiment of this sub-embodiment, the above method can send the BSR MAC CE in time after the first uplink grant.

As one embodiment, the dotted block F5.1 does not exist, and the dotted block F5.2 exists.

As one sub-embodiment of this embodiment, after the step S5105(b), if the BSR MAC CE in the first MAC PDU comprises a buffer status up to (comprising) the last event that a BSR is triggered before the first MAC PDU is assembled, all BSRs that are triggered before the first MAC PDU is assembled are cancelled.

As one sub-embodiment of this embodiment, after the step S5105(b), even if the BSR MAC CE in the first MAC PDU comprises a buffer status up to (comprising) the last event that a BSR is triggered before the first MAC PDU is assembled, the triggered BSR is not cancelled.

As one sub-embodiment of this embodiment, the above method can update a buffer status in time after the first uplink grant.

As one embodiment, a dotted block F5.3 exists.

As one sub-embodiment of this embodiment, the first control information is sent on the first uplink grant, wherein the first control information indicates whether at least one uplink grant following the first uplink grant is unused.

As one sub-embodiment of this embodiment, the first control information is transmitted on a physical layer channel corresponding to the first uplink grant.

As one sub-embodiment of this embodiment, the first control information is multiplexed on a physical layer channel corresponding to the first uplink grant.

As one sub-embodiment of this embodiment, the first control information occupies a physical layer resource corresponding to the first uplink grant.

As one sub-embodiment of this embodiment, the first control information occupies a PUSCH resource corresponding to the first uplink grant.

As one sub-embodiment of this embodiment, a position of the first control information on a PUSCH resource corresponding to the first uplink grant is pre-defined.

As one sub-embodiment of this embodiment, a position of the first control information on a PUSCH resource corresponding to the first uplink grant is configured by RRC.

As one sub-embodiment of this embodiment, a position of the first control information on a PUSCH resource corresponding to the first uplink grant is calculated.

As one sub-embodiment of this embodiment, the first control information is one piece of uplink control information (UCI).

As one sub-embodiment of this embodiment, the first control information is one piece of CG-UCI.

As one sub-embodiment of this embodiment, the first control information is one piece of UTO (Unused Transmission Occasion)-UCI.

As one sub-embodiment of this embodiment, the number of bits occupied by the first control information is fixed.

As one sub-embodiment of this embodiment, the number of bits occupied by the first control information is configurable.

As one sub-embodiment of this embodiment, the number of bits occupied by the first control information is pre-defined.

As one sub-embodiment of this embodiment, the number of bits occupied by the first control information is default.

As one sub-embodiment of this embodiment, the first control information comprises a first bitmap.

As one sub-embodiment of this embodiment, the first control information is the first bitmap.

As one sub-embodiment of this embodiment, the first control information comprises the first bitmap, and the first bitmap corresponds to the at least one uplink grant following the first uplink grant.

As one sub-embodiment of this embodiment, any bit in the first bitmap corresponds to one uplink grant among the at least one uplink grant following the first uplink grant.

As one sub-embodiment of this embodiment, a status of one bit in the first bitmap is used for indicating whether an uplink grant corresponding to the one bit is unused.

As one sub-embodiment of this embodiment, if one bit in the first bitmap is set to 1, an uplink grant corresponding to the one bit is indicated as unused; and if the one bit in the first bitmap is set to 0, the uplink grant corresponding to the one bit is indicated as not unused.

As one sub-embodiment of this embodiment, if one bit in the first bitmap is set to 0, an uplink grant corresponding to the one bit is indicated as unused; and if the one bit in the first bitmap is set to 1, the uplink grant corresponding to the one bit is indicated as not unused.

As one sub-embodiment of this embodiment, the first bitmap is one bit string.

As one sub-embodiment of this embodiment, the first bitmap is a positive integer number of consecutive bits.

As one sub-embodiment of this embodiment, the first bitmap is a positive integer number of non-consecutive bits.

As one sub-embodiment of this embodiment, a size of the first bitmap is fixed.

As one sub-embodiment of this embodiment, the size of the first bitmap is configured by RRC.

As one sub-embodiment of this embodiment, the size of the first bitmap is pre-defined.

As one sub-embodiment of this embodiment, the size of the first bitmap is variable.

As one sub-embodiment of this embodiment, the size of the first bitmap is the number of bits occupied by the first bitmap.

As one sub-embodiment of this embodiment, the size of the first bitmap depends on the number of the at least one uplink grant following the first uplink grant.

As one sub-embodiment of this embodiment, the size of the first bitmap is equal to the number of the at least one uplink grant following the first uplink grant.

As one sub-embodiment of this embodiment, the size of the first bitmap is not greater than the number of the at least one uplink grant following the first uplink grant.

As one sub-embodiment of this embodiment, the size of the first bitmap is not less than the number of the at least one uplink grant following the first uplink grant.

As one sub-embodiment of this embodiment, the first control information does not indicate that any uplink grant among the uplink grants following the first uplink grant is unused.

As one embodiment, any uplink grant among the uplink grants following the first uplink grant is indicated by the first control information.

As one embodiment, at least one uplink grant among the uplink grants following the first uplink grant is not indicated by the first control information.

As one sub-embodiment of this embodiment, the at least one uplink grant among the uplink grants following the first uplink grant that is not indicated by the first control information is unused by default.

As one sub-embodiment of this embodiment, the at least one uplink grant among the uplink grants following the first uplink grant that is not indicated by the first control information is not unused by default.

As one embodiment, a phrase that the first control information does not indicate that any uplink grant among the uplink grants following the first uplink grant is unused refers to: the first control information indicates that any uplink grant among the uplink grants following the first uplink grant is not unused.

As one embodiment, the phrase that the first control information does not indicate that any uplink grant among the uplink grants following the first uplink grant is unused refers to: any uplink grant among the uplink grants following the first uplink grant is indicated by the first control information as not unused or is not indicated by the first control information.

As one embodiment, the phrase that the first control information does not indicate that any uplink grant among the uplink grants following the first uplink grant is unused refers to: any uplink grant among the uplink grants following the first uplink grant is a valid uplink grant.

As one embodiment, the valid uplink grant is an uplink grant that can at least be indicated by the first control information as to whether it is unused.

As one embodiment, the valid uplink grant is an uplink grant that at least does not overlap with a first symbol set and can be indicated by the first control information as to whether it is unused.

As one embodiment, the valid uplink grant is an uplink grant that at least belongs to a given time interval and does not overlap with the first symbol set and can be indicated by the first control information as to whether it is unused.

As one embodiment, if the first control information indicates that one uplink grant is unused, the one uplink grant is not a valid uplink grant.

As one embodiment, the dotted block F5.3 does not exist.

As one embodiment, the dotted box F5.1 and the dotted box F5.3 both exist.

As one sub-embodiment of this embodiment, this embodiment does not limit the order of the step S5105(a) and the step S5106.

As one sub-embodiment of this embodiment, the step S5105(a) and the step S5106 are simultaneously executed.

As one embodiment, the dotted box F5.2 and the dotted box F5.3 both exist.

As one sub-embodiment of this embodiment, this embodiment does not limit the order of the step S5105(b) and the step S5106.

As one sub-embodiment of this embodiment, the step S5105(b) and the step S5106 are simultaneously executed.

As one embodiment, in each uplink grant configured by the first message, a first timer is restarted.

As one embodiment, in each uplink grant among the uplink grants following the first uplink grant, the first timer is restarted.

As one embodiment, in each uplink grant among the at least one uplink grant following the first uplink grant indicated by the first control information as to whether it is unused, the first timer is restarted.

As one embodiment, in at least one uplink grant among the at least one uplink grant following the first uplink grant indicated by the first control information as to whether it is unused, the first timer is not restarted.

As one embodiment, in each uplink grant configured by the first message, if the first timer is running, the first timer is restarted.

As one embodiment, in each uplink grant among the uplink grants following the first uplink grant, if the first timer is running, the first timer is restarted.

As one embodiment, in each uplink grant among the at least one uplink grant following the first uplink grant indicated by the first control information as to whether it is unused, if the first timer is running, the first timer is restarted.

As one embodiment, in at least one uplink grant among the at least one uplink grant following the first uplink grant indicated by the first control information as to whether it is unused, if the first timer is running, the first timer is not restarted.

### Embodiment 6

Embodiment 6 illustrates a flowchart of a wireless signal transmission according to another embodiment of the present application, as shown in FIG. 6. It is particularly noted that the order in this example does not limit the signal transmission order and implementation order in the present application.

For a **first node U01,** in step S6101, for one uplink grant among at least one uplink grant following a first uplink grant, whether first control information indicates that the one uplink grant is not unused is determined; when the first control information does not indicate that the one uplink grant is unused, step S6102 is entered; otherwise, step S6102 is skipped; and in step S6102, a first timer is restarted.

In Embodiment 6, for one uplink grant among the at least one uplink grant following the first uplink grant, whether to restart the first timer is determined for an indication of the one uplink grant according to the first control information; an action of determining whether to restart the first timer for the indication of the one uplink grant according to the first control information comprises: only when the first control information does not indicate that the one uplink grant is unused, restarting the first timer; and expiration of the first timer is used for triggering a BSR.

As one embodiment, the one uplink grant is any uplink grant among the at least one uplink grant following the first uplink grant.

As one embodiment, the one uplink grant is the first of uplink grants among the at least one uplink grants following the first uplink grant.

As one embodiment, the one uplink grant is an uplink grant adjacent to the first uplink grant among the at least one uplink grant following the first uplink grant.

As one embodiment, the one uplink grant is an uplink grant corresponding to the first bit in a first bitmap in the first control information.

As one embodiment, at a first moment, only when the first control information does not indicate that the one uplink grant is unused, the first timer is restarted.

As one embodiment, the first moment is related to a time domain resource of the one uplink grant.

As one embodiment, the first moment is related to a moment at which the one uplink grant is determined.

As one embodiment, the first moment is related to a moment at which the one uplink grant is acquired.

As one embodiment, the first moment is earlier than a starting moment of the one uplink grant in a time domain.

As one embodiment, the first moment is a starting moment of the one uplink grant in a time domain.

As one embodiment, the first moment is a moment at which the one uplink grant is determined.

As one embodiment, the first moment is a moment at which the one uplink grant is acquired.

As one embodiment, the first moment is later than an ending moment of the first uplink grant in a time domain.

As one embodiment, the first moment is when a MAC entity has the one uplink grant sent on a UL-SCH.

As one embodiment, the first moment is when a MAC entity receives the one uplink grant.

As one embodiment, the one uplink grant is used for a new data transmission.

As one embodiment, the one uplink grant is for a new data transmission on a UL-SCH.

As one embodiment, any uplink grant configured by a first message is used for a new data transmission.

As one embodiment, any uplink grant configured by the first message is for a new data transmission on a UL-SCH.

As one embodiment, when the first control information indicates that the one uplink grant is unused, the first uplink grant is considered to be one de-prioritized uplink grant.

As one embodiment, when the first control information indicates that the one uplink grant is unused, the first timer is not restarted.

As one embodiment, a phrase that only when the first control information does not indicate that the one uplink grant is unused refers to: the first control information indicates that the one uplink grant is not unused.

As one embodiment, the phrase that only when the first control information does not indicate that the one uplink grant is unused refers to: the first control information does not indicate the one uplink grant.

As one embodiment, a sentence that "only when the first control information does not indicate that the one uplink grant is unused, restarting the first timer" comprises: only when the first control information does not indicate that the one uplink grant is unused, if the first timer is running, the first timer is restarted.

As one embodiment, when the first control information does not indicate that the one uplink grant is unused, if the first timer is not running, the first timer is not started.

As one embodiment, the first timer is retxBSR-Timer.

As one embodiment, when the first timer, one BSR is triggered.

As one embodiment, when the first timer, one Regular BSR is triggered.

As one embodiment, when the first timer and at least one logical channel belonging to one LCG comprises uplink data (UL data), one BSR is triggered.

As one embodiment, when the first timer and at least one logical channel belonging to one LCG comprises uplink data (UL data), one Regular BSR is triggered.

### Embodiment 7

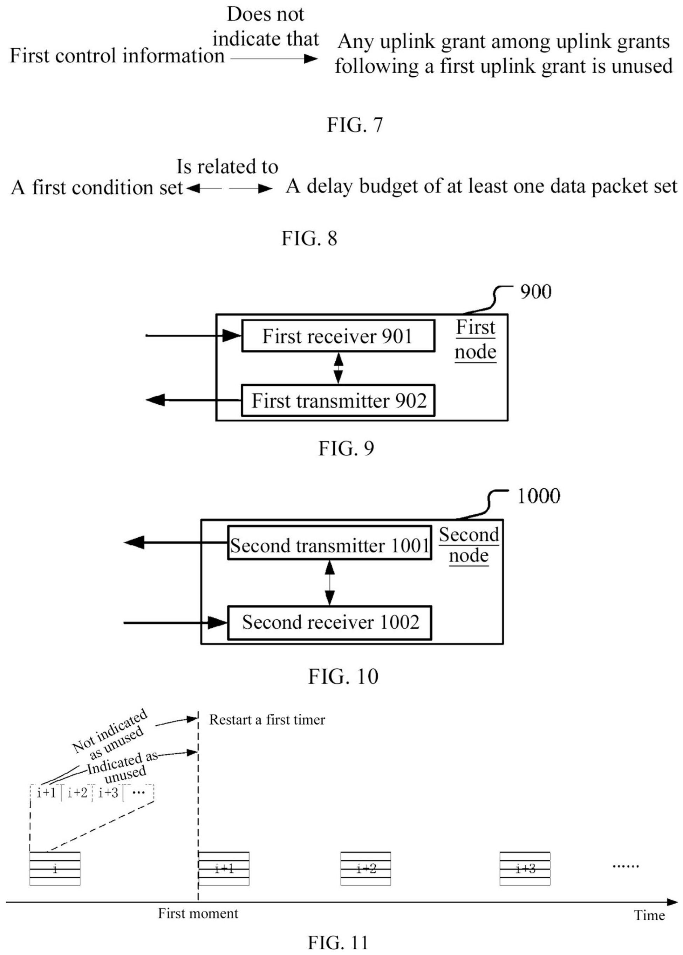

Embodiment 7 illustrates a schematic diagram in which first control information does not indicate that any uplink grant among uplink grants following a first uplink grant is unused according to one embodiment of the present application, as shown in FIG. 7. In Embodiment 7, the first control information does not indicate that any uplink grant among the uplink grants following the first uplink grant is unused.

As one embodiment, any uplink grant among the uplink grants following the first uplink grant is not indicated by the first control information as unused.

As one embodiment, any uplink grant among the uplink grants following the first uplink grant is indicated by the first control information as used.

As one embodiment, any uplink grant among the uplink grants following the first uplink grant is indicated by the first control information as not unused.

As one embodiment, any uplink grant among the uplink grants following the first uplink grant is indicated by the first control information as not unused or not indicated by the first control information.

As one embodiment, any uplink grant among the uplink grants following the first uplink grant is not determined to be unused.

As one embodiment, when one uplink grant is determined to be unused, the first control information indicates that the one uplink grant is unused; and when the one uplink grant is not determined to be unused, the first control information does not indicate that the one uplink grant is unused.

As one embodiment, when one uplink grant is determined to be unused, the first control information indicates that the one uplink grant is unused or the first control information does not indicate the one uplink grant; and when the one uplink grant is not determined to be unused, the first control information does not indicate that the one uplink grant is unused.

As one embodiment, when one uplink grant is determined to be unused, the first control information indicates that the one uplink grant is unused; and when one uplink grant is not determined to be unused, the first control information does not indicate that the one uplink grant is unused or the first control information does not indicate the one uplink grant.

As one embodiment, the first control information not indicating that the one uplink grant is unused refers to: the first control information indicates that the one uplink grant is not unused.

As one embodiment, the first control information not indicating that the one uplink grant is unused refers to: the first control information indicates that the one uplink grant is used.

### Embodiment 8

Embodiment 8 illustrates a schematic diagram in which a first condition set is related to a delay budget of at least one data packet set according to one embodiment of the present application, as shown in FIG. 8.

In Embodiment 8, the first condition set is related to a delay budget of at least one data packet set, and each data packet set among the at least one data packet set comprises at least one data packet.

As one embodiment, any uplink grant among uplink grants following a first uplink grant is not later than an ending moment of the delay budget of the at least one data packet set.

As one embodiment, all pending data available for sending comprises at least one data packet set.

As one embodiment, remaining pending data available for sending comprises the at least one data packet set.

As one embodiment, all the pending data available for sending is the at least one data packet set.

As one embodiment, the remaining pending data available for sending is the at least one data packet set.

As one embodiment, when the delay budget of the at least one data packet set is at least greater than a first threshold, the first condition set is satisfied; and the first threshold is configurable.

As one sub-embodiment of this embodiment, if the delay budget of the at least one data packet set is less than the first threshold, a first MAC PDU comprises a BSR MAC CE.

As one sub-embodiment of this embodiment, if the delay budget of the at least one data packet set is less than the first threshold, the first MAC PDU comprises the BSR MAC CE; and the BSR MAC CE indicates the delay budget.

As one sub-embodiment of this embodiment, the first threshold is configurable.

As one sub-embodiment of this embodiment, the first threshold is pre-defined.

As one embodiment, when an ending moment of a delay budget of the at least one data packet set is at least later than an ending moment of a latest uplink grant among the uplink grants following the first uplink grant in a time domain, the first condition set is satisfied.

As one sub-embodiment of this embodiment, an ending moment of the delay budget of the at least one data packet set is earlier than an ending moment of a latest uplink grant among the uplink grants following the first uplink grant in a time domain, and the first MAC PDU comprises the BSR MAC CE.

As one sub-embodiment of this embodiment, an ending moment of the delay budget of the at least one data packet set is earlier than an ending moment of a latest uplink grant among the uplink grants following the first uplink grant in a time domain, and the first MAC PDU comprises the BSR MAC CE; and the BSR MAC CE indicates the delay budget.

As one sub-embodiment of this embodiment, an ending moment of the delay budget of the at least one data packet set being later than an ending moment of a latest uplink grant among the uplink grants following the first uplink grant in a time domain refers to: an ending moment of the delay budget of the at least one data packet set is later than the N1^{th} symbol after an ending moment of a latest uplink grant among the uplink grants following the first uplink grant in a time domain.

As one sub-embodiment of this embodiment, N1 is configurable.

As one sub-embodiment of this embodiment, N1 is pre-defined.

As one embodiment, the at least one data packet set belongs to the same logical channel.

As one embodiment, the at least one data packet set belongs to the same logical channel group (LCG).

As one embodiment, the at least one data packet set belongs to the same MAC entity.

As one embodiment, the at least one data packet set belongs to the same DRB (Data Radio Bearer).

As one embodiment, each data packet set among the at least one data packet set is one PDU set.

As one embodiment, the delay budget of the at least one data packet set is a minimum value in a plurality of delay budgets.

As one embodiment, the delay budget of the at least one data packet set is a minimum value of a delay budget of each data packet set among the at least one data packet set.

As one embodiment, the delay budget of the at least one data packet set shares one delay budget.

As one embodiment, at an ending moment of the delay budget of the at least one data packet set, at least one data packet of the at least one data packet set is discarded.

As one embodiment, at an ending moment of the delay budget of the at least one data packet set, each data packet of the at least one data packet set is discarded.

As one embodiment, an ending moment of the delay budget of the at least one data packet set is a moment when one PDCP discard timer expires.

As one embodiment, the PDCP discard timer is discardTimer.

As one embodiment, a name of the PDCP discard timer comprises discard and Timer.

As one embodiment, the name of the PDCP discard timer comprises discardTimer.

As one embodiment, the delay budget is a remaining time.

As one embodiment, the delay budget is a PDB (PDU Delay Budget).

As one embodiment, the delay budget is a PSDB (PDU-Set Delay Budget).

As one embodiment, the delay budget is calculated according to a PSDB.

As one embodiment, the delay budget is calculated according to a PSDB and a PDCP discard timer.

As one embodiment, the delay budget is calculated according to a PDCP discard timer.

As one embodiment, the delay budget is a remaining time of one PDCP discard timer.

### Embodiment 9

Embodiment 9 illustrates a structural block diagram of a processing apparatus used in a first node according to one embodiment of the present application, as shown in FIG. 9. In FIG. 9, a processing apparatus 900 in the first node comprises a first receiver 901 and a first transmitter 902.

The first receiver 901 receives a first message, wherein the first message configures uplink grants, and any two uplink grants configured by the first message do not overlap with each other in terms of time; and
the first transmitter 902 triggers at least one BSR, and after an action of triggering the at least one BSR, sends a first MAC PDU on a first uplink grant.

In Embodiment 9, whether the first MAC PDU comprises a BSR MAC CE depends on whether a first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message.

As one embodiment, the first transmitter 902 sends first control information on the first uplink grant, wherein the first control information indicates whether at least one uplink grant following the first uplink grant is unused.

As one embodiment, the first transmitter 902, for one uplink grant among the at least one uplink grant following the first uplink grant, determines whether to restart a first timer for an indication of the one uplink grant according to the first control information, wherein an action of determining whether to restart the first timer for the indication of the one uplink grant according to the first control information comprises: only when the first control information does not indicate that the one uplink grant is unused, restarting the first timer; and expiration of the first timer is used for triggering a BSR.

As one embodiment, the first control information does not indicate that any uplink grant among the uplink grants following the first uplink grant is unused.

As one embodiment, the first condition set is related to a delay budget of at least one data packet set, and each data packet set among the at least one data packet set comprises at least one data packet.

As one embodiment, the first transmitter 902, when the first condition set is satisfied, cancels a triggered BSR, wherein an action of cancelling the triggered BSR is used for determining that the first MAC PDU does not comprise the BSR.

As one embodiment, if the first MAC PDU comprises the BSR MAC CE, an indication of a buffer size field in the BSR MAC CE comprised in the first MAC PDU depends on an uplink grant following the first uplink grant.

As one embodiment, the first receiver 901 comprises an antenna 452, a receiving device 454, a multi-antenna receiving processor 458, a receiving processor 456, a controller/processor 459, a memory 460, and a data source 467 in FIG. 4 of the present application.

As one embodiment, the first receiver 901 comprises the antenna 452, the receiving device 454, the multi-antenna receiving processor 458, and the receiving processor 456 in FIG. 4 of the present application.

As one embodiment, the first receiver 901 comprises the antenna 452, the receiving device 454, and the receiving processor 456 in FIG. 4 of the present application.

As one embodiment, the first transmitter 902 comprises the antenna 452, a transmitting device 454, a multi-antenna transmitting processor 457, a transmitting processor 468, the controller/processor 459, the memory 460, and the data source 467 in FIG. 4 of the present application.

As one embodiment, the first transmitter 902 comprises the antenna 452, the transmitting device 454, the multi-antenna transmitting processor 457, and the transmitting processor 468 in FIG. 4 of the present application.

As one embodiment, the first transmitter 902 comprises the antenna 452, the transmitting device 454, and the transmitting processor 468 in FIG. 4 of the present application.

### Embodiment 10

Embodiment 10 illustrates a structural block diagram of a processing apparatus used in a second node according to one embodiment of the present application, as shown in FIG. 10. In

FIG. 10, a processing apparatus 1000 in the second node comprises a second transmitter 1001 and a second receiver 1002.

The second transmitter 1001 sends a first message, wherein the first message configures uplink grants, and any two uplink grants configured by the first message do not overlap with each other in terms of time; and
the second receiver 1002 receives a first MAC PDU on a first uplink grant.

In Embodiment 10, after at least one BSR is triggered, the first MAC PDU is sent; whether the first MAC PDU comprises a BSR MAC CE depends on whether a first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message.

As one embodiment, the second receiver 1002 receives first control information on the first uplink grant, and the first control information indicates whether at least one uplink grant following the first uplink grant is unused.

As one embodiment, for one uplink grant among the at least one uplink grant following the first uplink grant, a recipient of the first message determines whether to restart a first timer for an indication of the one uplink grant according to the first control information; an action of determining whether to restart the first timer for the indication of the one uplink grant according to the first control information comprises: only when the first control information does not indicate that the one uplink grant is unused, restarting the first timer; and expiration of the first timer is used for triggering a BSR.

As one embodiment, the first control information does not indicate that any uplink grant among the uplink grants following the first uplink grant is unused.

As one embodiment, the first condition set is related to a delay budget of at least one data packet set, and each data packet set among the at least one data packet set comprises at least one data packet.

As one embodiment, when the first condition set is satisfied, the recipient of the first message cancels a triggered BSR; and an action of cancelling the triggered BSR is used for determining that the first MAC PDU does not comprise the BSR.

As one embodiment, if the first MAC PDU comprises the BSR MAC CE, an indication of a buffer size field in the BSR MAC CE comprised in the first MAC PDU depends on an uplink grant following the first uplink grant.

As one embodiment, the second transmitter 1001 comprises an antenna 420, a transmitting device 418, a multi-antenna transmitting processor 471, a transmitting processor 416, a controller/processor 475, and a memory 476 in FIG. 4 of the present application.

As one embodiment, the second transmitter 1001 comprises the antenna 420, the transmitting device 418, the multi-antenna transmitting processor 471, and the transmitting processor 416 in FIG. 4 of the present application.

As one embodiment, the second transmitter 1001 comprises the antenna 420, the transmitting device 418, and the transmitting processor 416 in FIG. 4 of the present application.

As one embodiment, the second receiver 1002 comprises the antenna 420, a receiving device 418, a multi-antenna receiving processor 472, a receiving processor 470, the controller/processor 475, and the memory 476 in FIG. 4 of the present application.

As one embodiment, the second receiver 1002 comprises the antenna 420, the receiving device 418, the multi-antenna receiving processor 472, and the receiving processor 470 in FIG. 4 of the present application.

As one embodiment, the second receiver 1002 comprises the antenna 420, the receiving device 418, and the receiving processor 470 in FIG. 4 of the present application.

### Embodiment 11

Embodiment 11 illustrates a schematic diagram in which whether to restart a first timer is determined for an indication of one uplink grant according to first control information, according to one embodiment of the present application, as shown in FIG. 11. In FIG. 11, a horizontal axis represents time; each block filled with horizontal lines belongs to an uplink grant configured by a first message, a block i filled with the horizontal lines represents a first uplink grant, and blocks i+1, i+2, i+3... filled with the horizontal line blocks represent uplink grants indicated by first bitmaps following the first uplink grant; and dotted blocks i+1, i+2, i+3... represent the first bitmaps in the first control information.

In Embodiment 11, the first control information comprises the first bitmap; the one uplink grant among the at least one uplink grant following the first uplink grant indicated by the first control information is an uplink grant corresponding to a block i+1 filled with horizontal line blocks.

As one embodiment, the first bitmaps i+1, i+2, i+3... in the first control information respectively indicate whether uplink grants corresponding to the blocks i+1, i+2, i+3,... filled with horizontal line blocks are unused.

As one embodiment, for an uplink grant corresponding to a block i+1 filled with horizontal line blocks, a bit i+1 in the first bitmap in the first control information does not indicate that the one uplink grant is unused, and at a first moment, the first timer is restarted.

As one embodiment, for an uplink grant corresponding to a block i+1 filled with horizontal line blocks, the bit i+1 in the first bitmap in the first control information indicates that the one uplink grant is unused, and at the first moment, the first timer is not restarted.

As one embodiment, the first moment is earlier than a starting moment of an uplink grant corresponding to the block i+1 filled with horizontal line blocks in a time domain.

As one embodiment, the first moment is a starting moment of an uplink grant corresponding to the block i+1 filled with horizontal line blocks in a time domain.

As one embodiment, the first moment is a moment when an uplink grant corresponding to the block i+1 filled with horizontal line blocks is determined.

As one embodiment, the first moment is later than an ending moment of the first uplink grant in a time domain.

As one embodiment, the first moment is related to a time domain resource of an uplink grant corresponding to the block i+1 filled with horizontal line blocks.

As one embodiment, the first moment is related to a moment when an uplink grant corresponding to a block i+1 filled with horizontal line blocks is determined.

As one embodiment, this embodiment does not limit whether there exist other uplink grants configured by the first message between two adjacent uplink grants in FIG. 11.

As one embodiment, this embodiment does not limit sizes of the first bitmaps i+1, i+2, i+3... in FIG. 11.

As one embodiment, this embodiment does not limit whether uplink grants in the first bitmaps i+1, i+2, i+3... in FIG. 11 belong to the same configuration period.

As one embodiment, in this embodiment, for the convenience of description, the first control information comprises the first bitmap; and in a specific implementation, there is no limitation on how the first control information indicates whether at least one uplink grant following the first uplink grant is unused.

As one embodiment, in this embodiment, for the convenience of description, an uplink grant corresponding to the block i+1 filled with horizontal line blocks is used as the one uplink grant among the at least one uplink grant following the first uplink grant indicated by the first control information; and in a specific implementation, there is no limitation on whether the one uplink grant among the at least one uplink grant following the first uplink grant indicated by the first control information is an uplink grant corresponding to the block i+1 filled with horizontal line blocks.

Those of ordinary skill in the art can understand that all or part of the steps in the above method can be completed by instructing relevant hardware through a program, and the program can be stored in a computer-readable storage medium, such as a read-only memory, a hard disk or an optical disk. Optionally, all or part of the steps in the above embodiments can also be implemented using one or more integrated circuits. Accordingly, each module unit in the above embodiments can be implemented in the form of hardware or in the form of a software function module. The present application is not limited to any specific form of software and hardware combinations. The user equipment, terminals and UE in the present application include but are not limited to drones, communication modules on the drones, remote-controlled airplanes, aircrafts, small airplanes, mobile phones, tablet computers, notebook computers, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers, and other wireless communication devices. The base station or system device in the present application includes but is not limited to macrocellular base stations, microcellular base stations, Femtocells, relay base stations, gNBs (NR nodes B), TRPs (Transmitter Receiver Points), and other wireless communication devices.

The above are only preferred embodiments of the present application and is not intended to limit the scope of protection of the present application. Any modifications, equivalent substitutions, improvements and the like made within the spirit and principles of the present application shall be comprised within the scope of protection of the present application.

## Claims

1. A first node for wireless communication, comprising:
a first receiver receiving a first message, wherein the first message configures uplink grants, and any two uplink grants configured by the first message do not overlap with each other in terms of time; and
a first transmitter triggering at least one BSR, and after an action of triggering the at least one BSR, sending a first MAC PDU on a first uplink grant,
wherein whether the first MAC PDU comprises a BSR MAC CE depends on whether a first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message.

2. The first node according to claim 1, comprising:
the first transmitter sending first control information on the first uplink grant, wherein the first control information indicates whether at least one uplink grant following the first uplink grant is unused.

3. The first node according to claim 2, comprising:
the first transmitter, for one uplink grant among the at least one uplink grant following the first uplink grant, determining whether to restart a first timer for an indication of the one uplink grant according to the first control information,
wherein an action of determining whether to restart the first timer for the indication of the one uplink grant according to the first control information comprises: only when the first control information does not indicate that the one uplink grant is unused, restarting the first timer; and expiration of the first timer is used for triggering a BSR.

4. The first node according to claim 2 or 3, wherein the first control information does not indicate that any uplink grant among the uplink grants following the first uplink grant is unused.

5. The first node according to any one of claims 1 to 4, wherein the first condition set is related to a delay budget of at least one data packet set, and each data packet set among the at least one data packet set comprises at least one data packet.

6. The first node according to any one of claims 1 to 5, comprising:
the first transmitter, when the first condition set is satisfied, cancelling a triggered BSR,
wherein an action of cancelling the triggered BSR is used for determining that the first MAC PDU does not comprise the BSR.

7. A second node for wireless communication, comprising:
a second transmitter sending a first message, wherein the first message configures uplink grants, and any two uplink grants configured by the first message do not overlap with each other in terms of time; and
a second receiver receiving a first MAC PDU on a first uplink grant,
wherein after at least one BSR is triggered, the first MAC PDU is sent; whether the first MAC PDU comprises a BSR MAC CE depends on whether a first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message.

8. A method used in a first node for wireless communication, comprising:
receiving a first message, wherein the first message configures uplink grants, and any two uplink grants configured by the first message do not overlap with each other in terms of time;
triggering at least one BSR, and after an action of triggering the at least one BSR, sending a first MAC PDU on a first uplink grant,
wherein whether the first MAC PDU comprises a BSR MAC CE depends on whether a first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message.

9. A method used in a second node for wireless communication, comprising:
sending a first message, wherein the first message configures uplink grants, and any two uplink grants configured by the first message do not overlap with each other in terms of time; and
receiving a first MAC PDU on a first uplink grant,
wherein after at least one BSR is triggered, the first MAC PDU is sent; whether the first MAC PDU comprises a BSR MAC CE depends on whether a first condition set is satisfied; when the first condition set is satisfied, the first MAC PDU does not comprise the BSR MAC CE; when the first condition set is not satisfied, the first MAC PDU comprises the BSR MAC CE; the first condition set is related to an uplink grant following the first uplink grant; and the first uplink grant and the uplink grant following the first uplink grant are configured by the first message.
